# EUROPEAN PATENT APPLICATION

(11) **EP 4 745 893 A1**
(43) Date of publication of application: **20.05.2026**
(21) Application number: 24839533.7
(22) Date of filing: 27.06.2024
(51) Int. Cl.: G06T 9/00, H04N 19/503, H04N 19/597

(54) **INFORMATION PROCESSING DEVICE AND METHOD**

(30) Priority: 10.07.2023 JP 2023112790
(71) Applicant: Sony Group Corporation, Tokyo 108-0075 (JP)
(72) Inventor: KUMA, Satoru, Tokyo 108-0075 (JP); KATO, Tsuyoshi, Tokyo 108-0075 (JP); HAYASHI, Kao, Tokyo 108-0075 (JP); NAGANUMA, Tomoya, Tokyo 108-0075 (JP)
(74) Representative: D Young & Co LLP
(86) International application number: PCT/JP2024/023279
(87) International publication number: WO 2025/013640

(57) **Abstract**

The present disclosure relates to an information processing apparatus and an information processing method that can suppress a decrease in coding efficiency. Control information is encoded that is used for controlling a processing target range of inter-coding and inter-decoding of a mesh, a reference mesh is updated on the basis of the control information, and the current mesh is inter-coded using the updated reference mesh. Additionally, encoded data is decoded to generate control information for the encoded data, a reference mesh is updated on the basis of the control information, and the encoded data is inter-decoded using an updated reference mesh, to generate a current mesh. The present disclosure can be applied to, for example, an information processing apparatus, electronic equipment, an information processing method, a program, or the like.

## Description

### Technical Field

The present disclosure relates to an information processing apparatus and an information processing method, and particularly relates to an information processing apparatus and an information processing method that can suppress a decrease in coding efficiency.

### Background Art

Known technologies include Video-based Dynamic Mesh Coding (V-DMC) as a method of encoding a mesh that is 3D data representing a three dimensional structure of an object by vertices and connections (for example, see NPL 1). In V-DMC, a mesh to be encoded is represented by a coarse base mesh and displacement vectors of division points obtained by subdividing the base mesh, and the base mesh and the displacement vectors are encoded. The displacement vectors are stored (packed) in a two dimensional image, and encoding is performed using the two dimensional image as a frame, to obtain a moving image (displacement video).

Methods of encoding the base mesh include intra-coding in which encoding is performed independently for each frame and inter-coding in which encoding is performed using a correlation between frames. The inter-coding achieves high coding efficiency, but applying the inter-coding requires a mesh topology (graph structure), that is, the number of vertices and the connections between the vertices to remain matched.

In recent years, a method has been proposed in which one frame is divided into a plurality of sub-meshes (patches) and the sub-meshes are encoded independently of each other (for example, see NPL 2 and NPL 3). By sub-meshing a portion of the image where the topology remains matched, the inter-coding can be more easily applied.

### Citation List

### Non Patent Literature

NPL 1: Khaled Mammou, Jungsun Kim, Alexis Tourapis, Dimitri Podborski, Krasimir Kolarov, "[V-CG] Apple's Dynamic Mesh Coding CfP Response", ISO/IEC JTC1/SC29/WG 7 m59281, April 2022
NPL 2: Alexis Tourapis, Jungsun Kim, Dimitri Podborski, Khaled Mammou, "Base mesh data substream format for VDMC", ISO/IEC JTC1/SC29/WG 7 m60362, July 2022
NPL 3: Jungsun Kim, Alexis Tourapis, Dimitri Podborski, Khaled Mammou, David, "VDMC support in the V3C framework", ISO/IEC JTC1/SC29/WG 7 m60363, July 2022

### Summary of Invention

### Technical Problem

However, the sub-meshes are set for all the intervals of the sequence, and thus it is difficult to flexibly control a processing target range of the inter-coding and inter-decoding in the time direction. Accordingly, coding efficiency may decrease due to sub-meshing of unnecessary intervals, an increase in the number of sub-meshes, or the like.

The present disclosure has been made in view of the above circumstances, and is intended to suppress a decrease in coding efficiency.

### Solution to Problem

According to an aspect of the present technology, an information processing apparatus includes a control information encoding unit configured to encode control information for controlling a processing target range of inter-coding and inter-decoding of a mesh representing a three dimensional structure of an object, a reference mesh update unit configured to update, on the basis of the control information, a reference mesh that is the mesh to be referred to during the inter-coding, and an inter-coding unit configured to perform inter-coding on a current mesh that is the mesh of a current frame using an updated reference mesh that is the reference mesh that has been updated.

According to an aspect of the present technology, an information processing method is an information processing method including encoding control information for controlling a processing target range of inter-coding and inter-decoding of a mesh representing a three dimensional structure of an object, updating, on the basis of the control information, a reference mesh that is the mesh to be referred to during the inter-coding, and performing inter-coding on a current mesh that is the mesh of a current frame, using an updated reference mesh that is the reference mesh that has been updated.

According to another aspect of the present technology, an information processing apparatus includes a control information decoding unit configured to decode encoded data to generate control information for controlling a processing target range of inter-coding and inter-decoding of a mesh representing a three dimensional structure of an object, a reference mesh update unit configured to update, on the basis of the control information, a reference mesh that is the mesh to be referred to during the inter-decoding, and an inter-decoding unit configured to perform inter-decoding on the encoded data using an updated reference mesh that is the reference mesh that has been updated, to generate a current mesh that is the mesh of a current frame.

According to another aspect of the present technology, an information processing method includes decoding encoded data to generate control information for controlling a processing target range of inter-coding and inter-decoding of a mesh representing a three dimensional structure of an object, updating, on the basis of the control information, a reference mesh that is the mesh to be referred to during the inter-decoding, and performing inter-decoding on the encoded data using an updated reference mesh that is the reference mesh that has been updated, to generate a current mesh that is the mesh of a current frame.

In the information processing apparatus and information processing method according to the aspect of the present technology, the control information is encoded that is used for controlling the processing target range of the inter-coding and the inter-decoding of the mesh representing the three dimensional structure of the object, the reference mesh that is the mesh to be referred to during the inter-coding is updated on the basis of the control information, and the current mesh that is the mesh of the current frame is inter-coded using the updated reference mesh that is the reference mesh that has been updated.

In the information processing apparatus and information processing method according to the another aspect of the present technology, the encoded data is decoded to generate the control information for controlling the processing target range of the inter-coding and the inter-decoding of the mesh representing the three dimensional structure of the object, the reference mesh that is the mesh to be referred to during the inter-decoding is updated on the basis of the control information, and the encoded data is inter-decoded using the updated reference mesh that is the reference mesh that has been updated, to generate the current mesh that is the mesh of the current frame.

### Brief Description of Drawings

[Fig. 1]

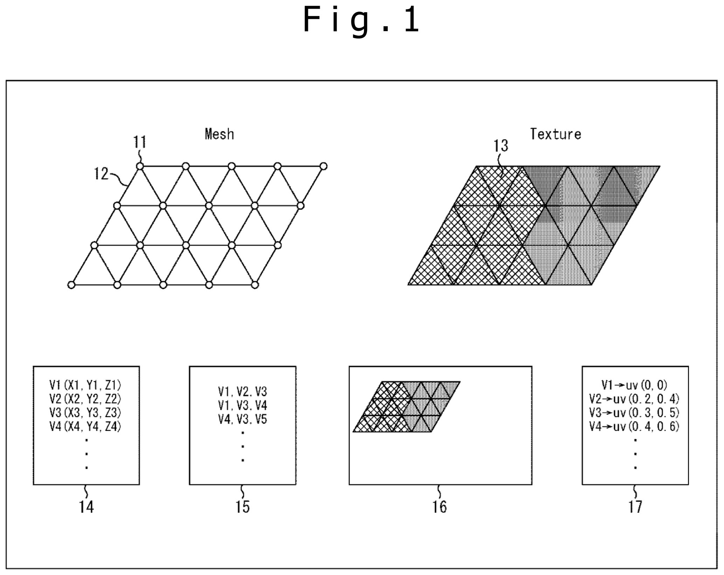

   Fig. 1 is diagram for describing a mesh.
[Fig. 2]

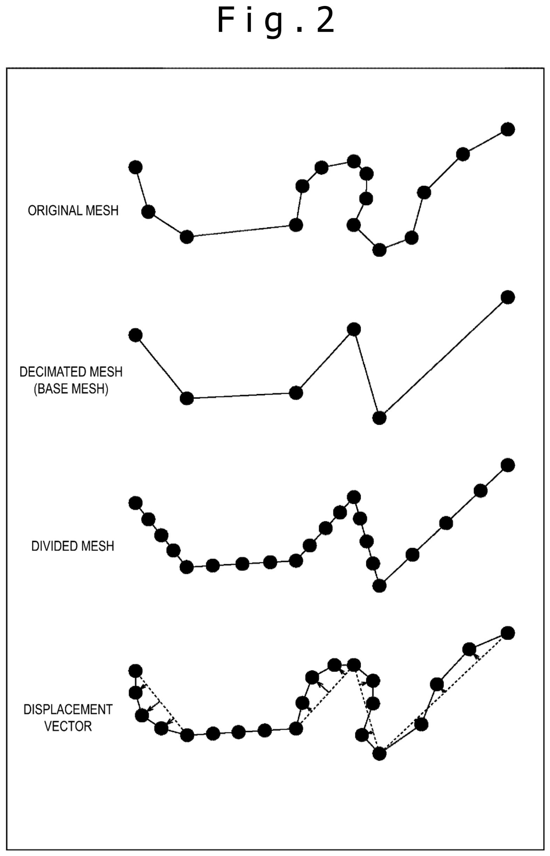

   Fig. 2 is a diagram for describing V-DMC.
[Fig. 3]

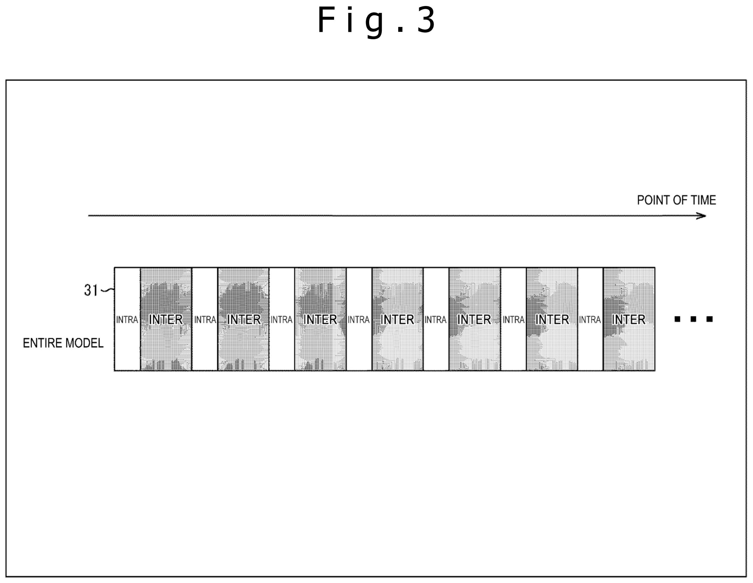

   Fig. 3 is a diagram illustrating a configuration example of a bit stream.
[Fig. 4]

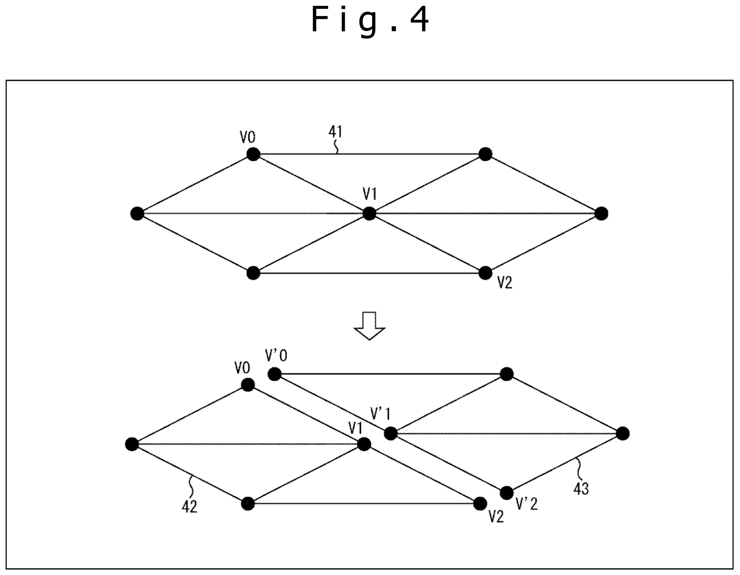

   Fig. 4 is a diagram for describing sub-meshing.
[Fig. 5]

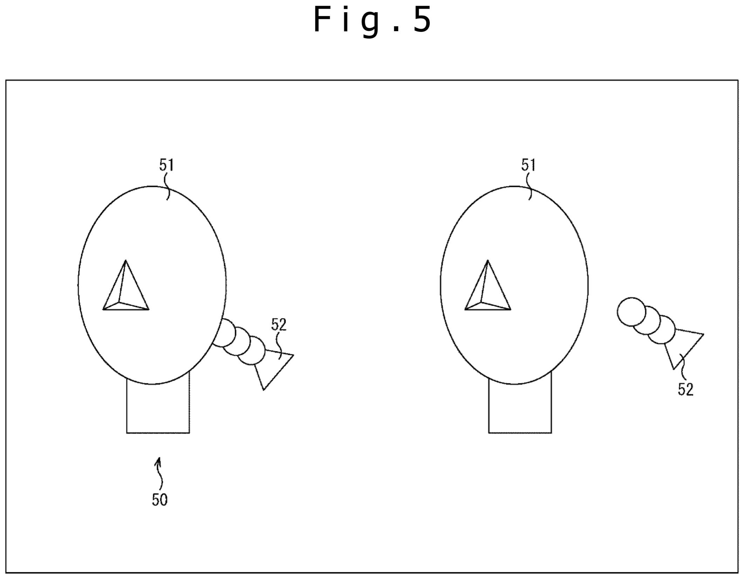

   Fig. 5 is a diagram for describing the sub-meshing.
[Fig. 6]

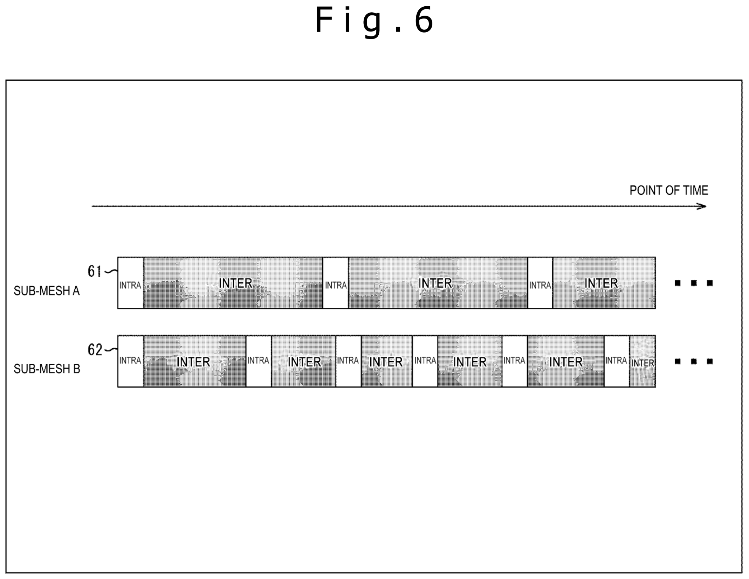

   Fig. 6 is a diagram illustrating a configuration example of a bit stream.
[Fig. 7]

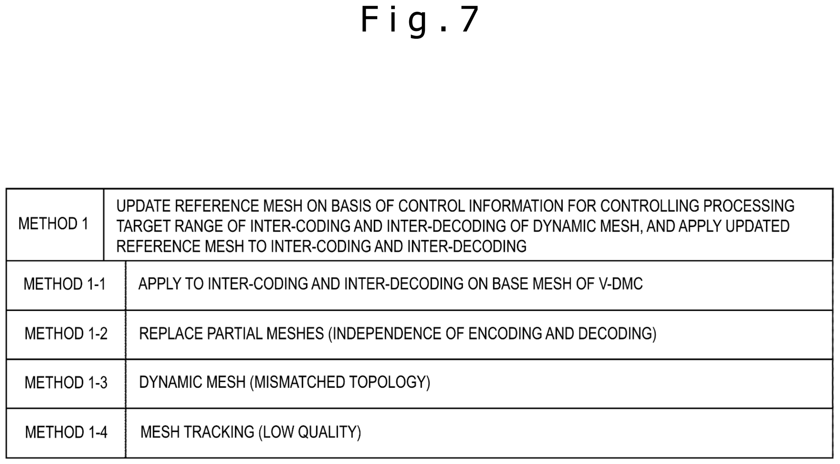

   FIG. 7 is a diagram illustrating an example of a method of encoding and decoding a mesh.
[Fig. 8]

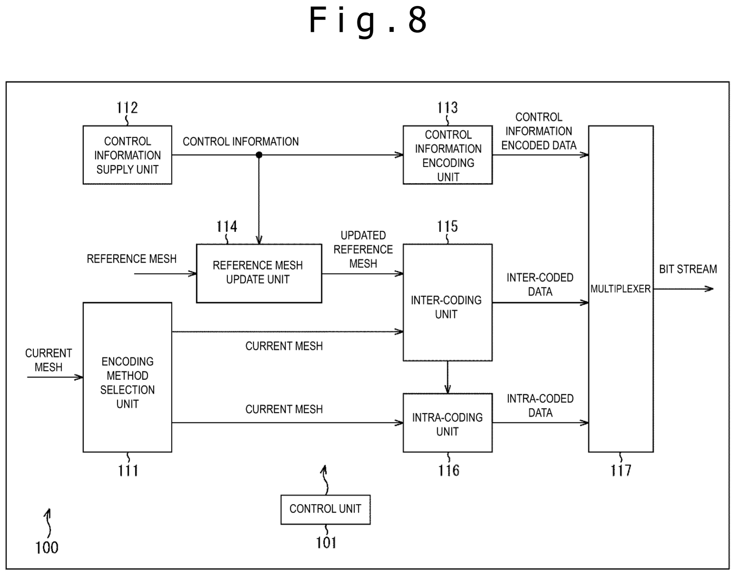

   Fig. 8 is a block diagram illustrating a configuration example of an encoding apparatus.
[Fig. 9]

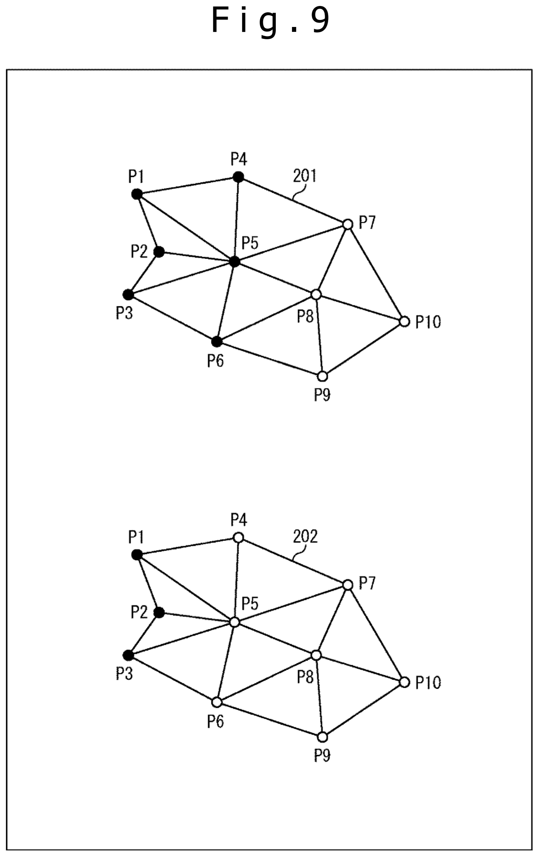

   Fig. 9 is a diagram illustrating an example of a method of designating a control target.
[Fig. 10]

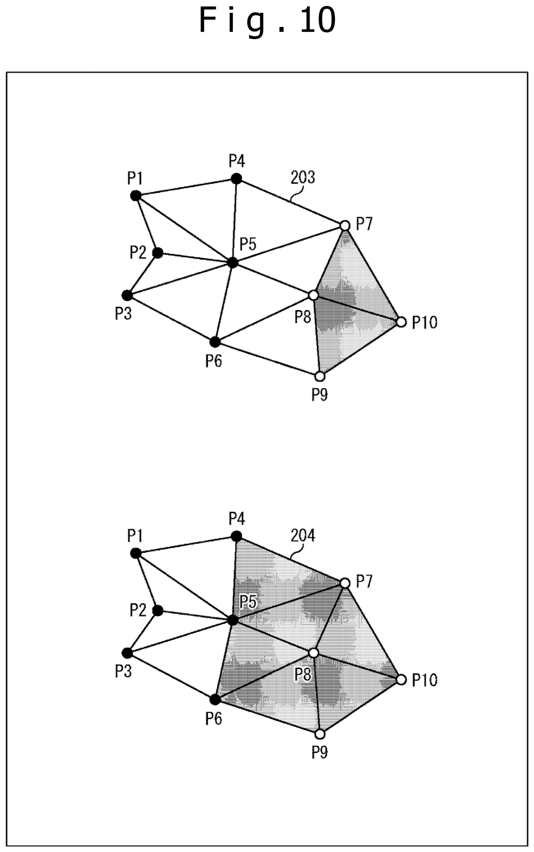

   Fig. 10 is a diagram illustrating an example of the method of designating the control target.
[Fig. 11]

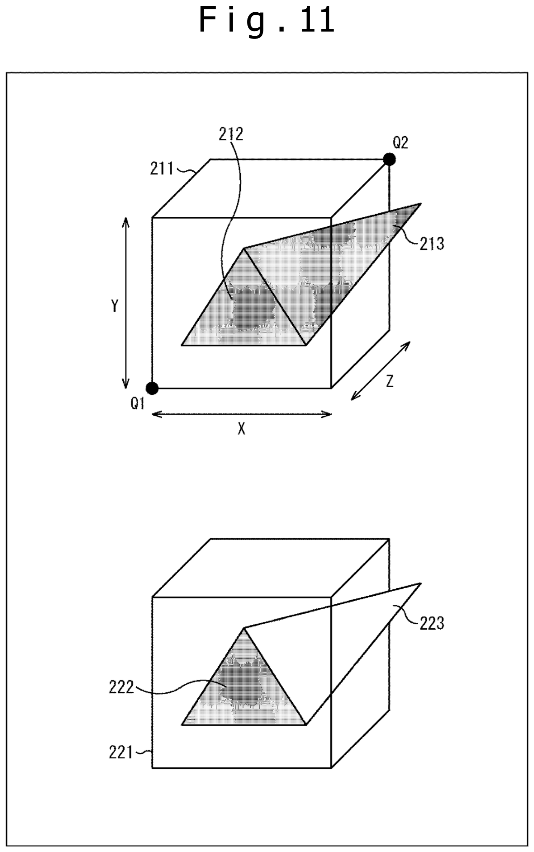

   Fig. 11 is a diagram illustrating an example of the method of designating the control target.
[Fig. 12]

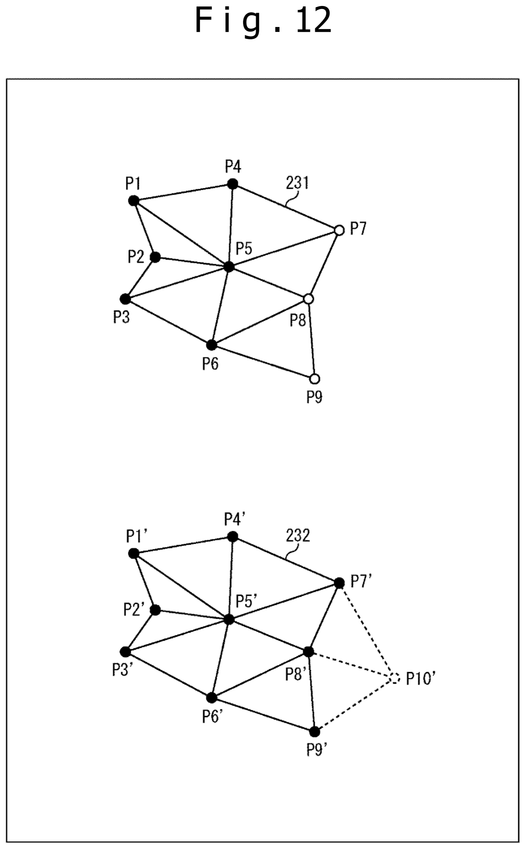

   Fig. 12 is a diagram illustrating an example of update of the mesh.
[Fig. 13]

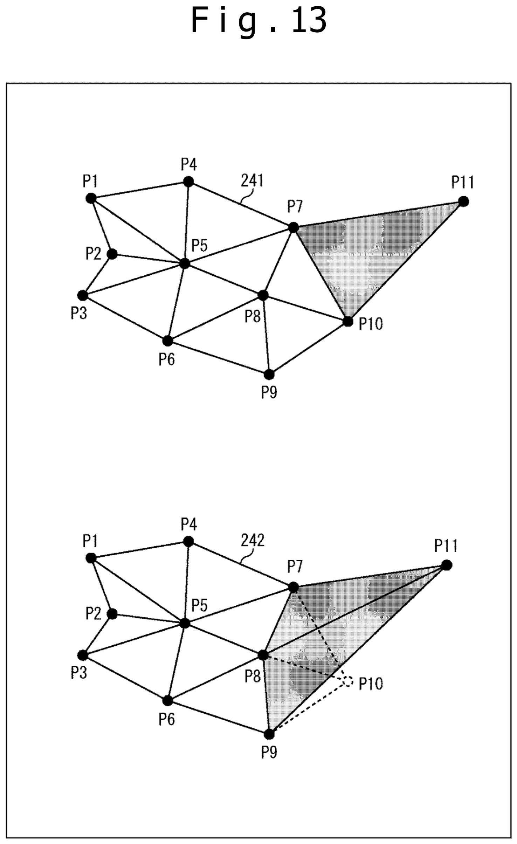

   Fig. 13 is a diagram illustrating an example of update of the mesh.
[Fig. 14]

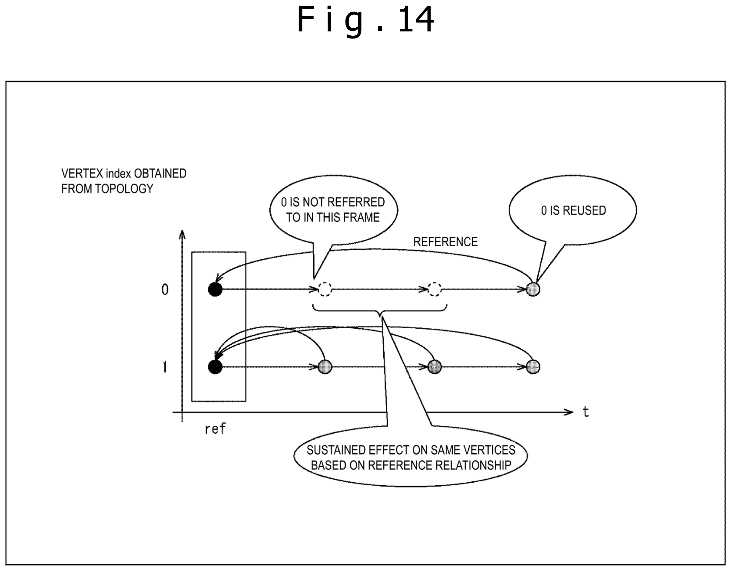

   Fig. 14 is a diagram illustrating an example of an update interval for the mesh.
[Fig. 15]

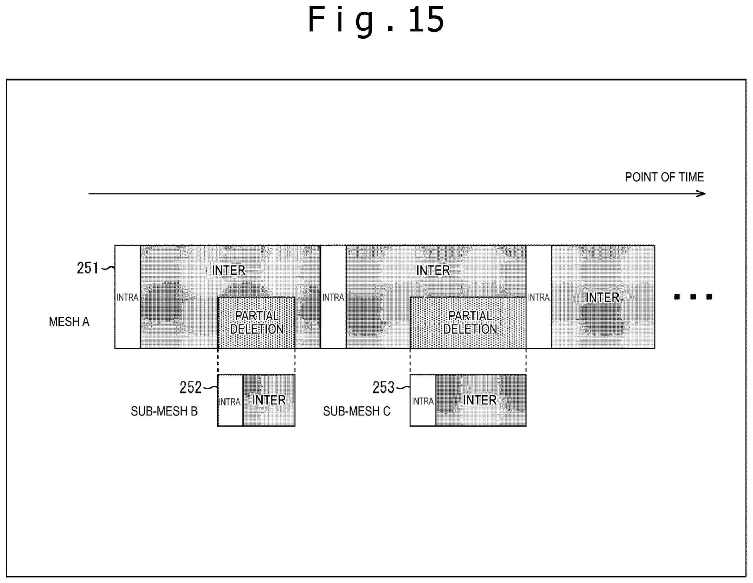

   Fig. 15 is a diagram illustrating a configuration example of a bit stream.
[Fig. 16]

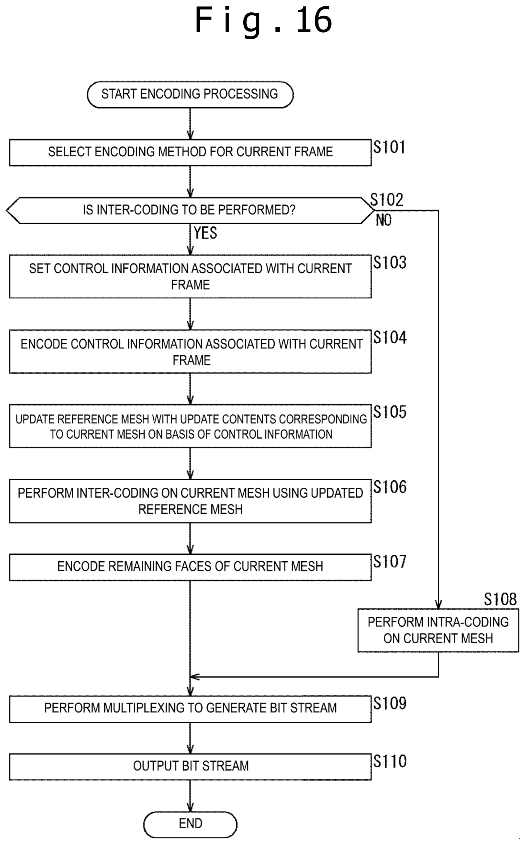

   Fig. 16 is a flowchart for describing an example of a flow of encoding processing.
[Fig. 17]

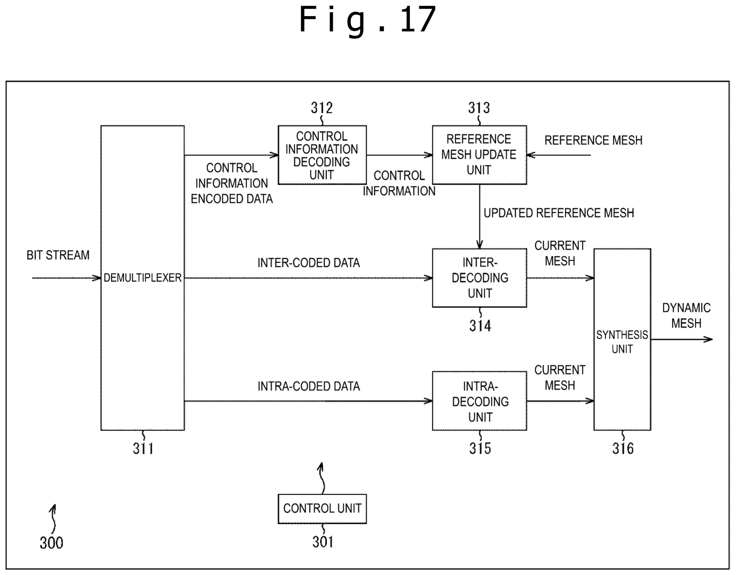

   Fig. 17 is a block diagram illustrating a main configuration example of a decoding apparatus.
[Fig. 18]

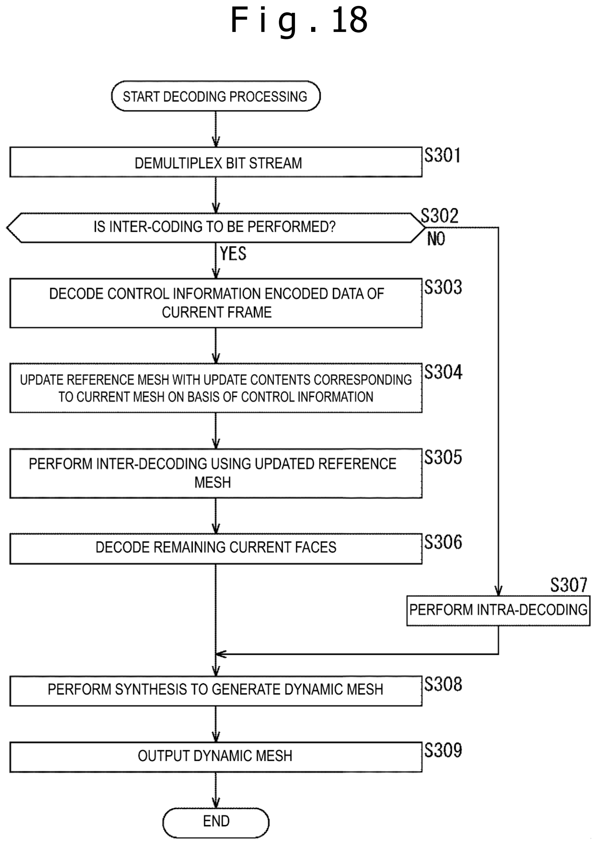

   Fig. 18 is a flowchart for describing an example of a flow of decoding processing.
[Fig. 19]

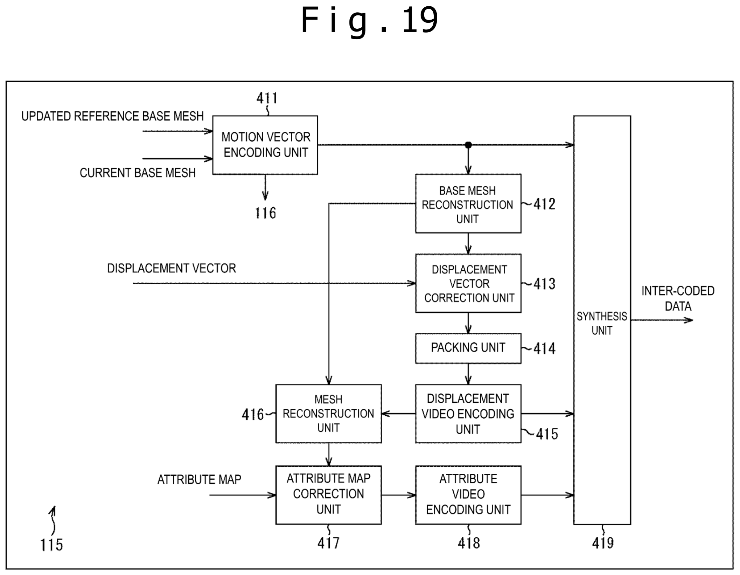

   Fig. 19 is a block diagram illustrating a main configuration example of an inter-coding unit.
[Fig. 20]

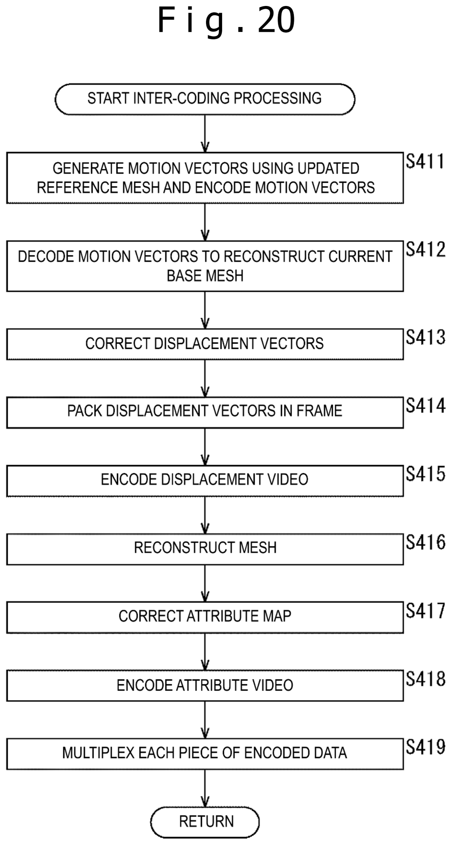

   Fig. 20 is a flowchart for describing an example of a flow of inter-coding processing.
[Fig. 21]

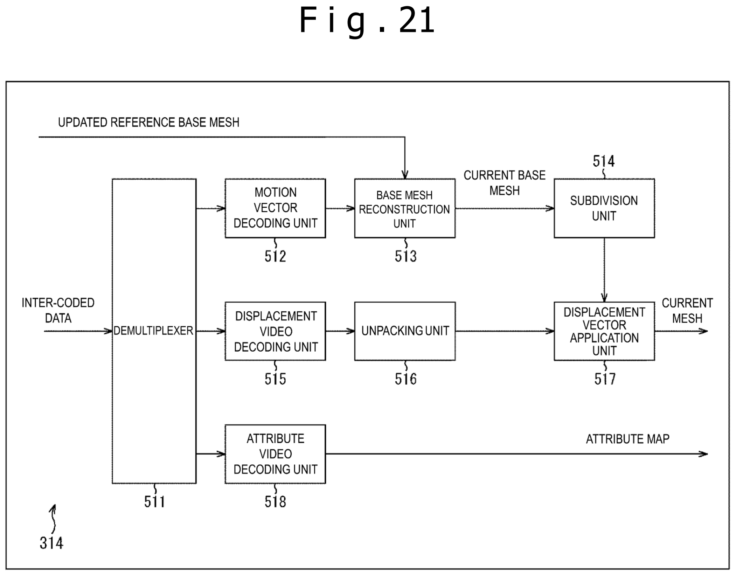

   Fig. 21 is a block diagram illustrating a configuration example of an inter-decoding unit.
[Fig. 22]

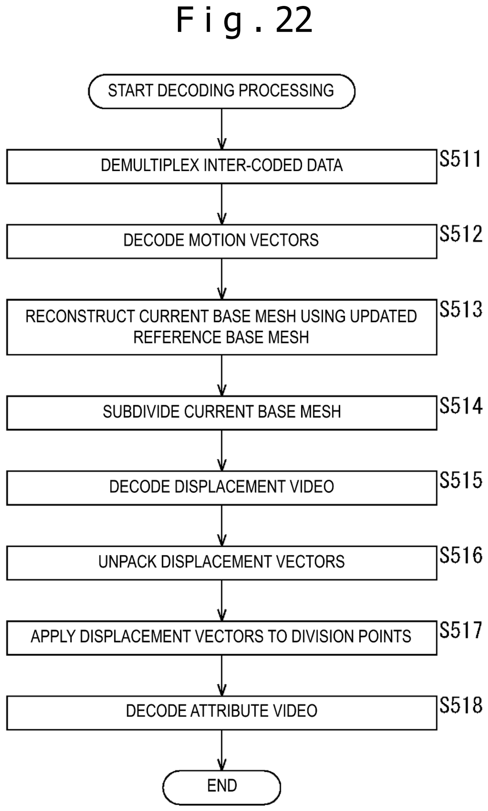

   Fig. 22 is a flowchart for describing an example of a flow of inter-decoding processing.
[Fig. 23]

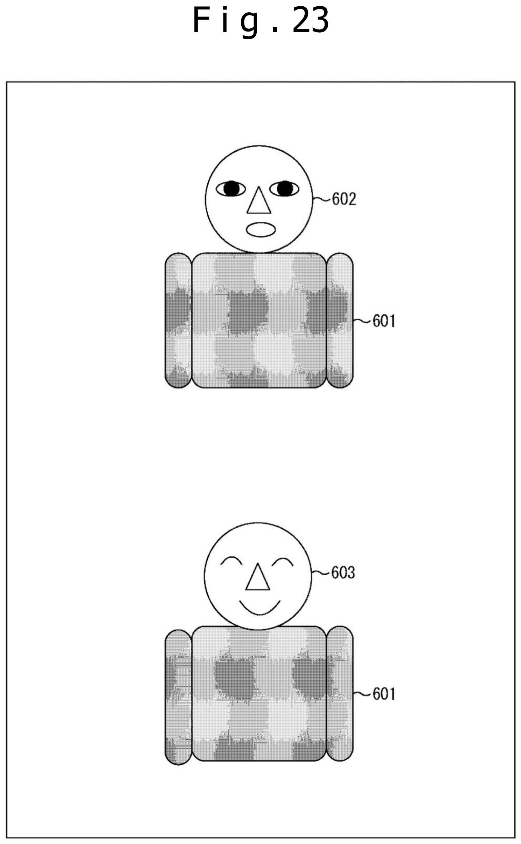

   Fig. 23 is a diagram for describing an application example of the present technology.
[Fig. 24]

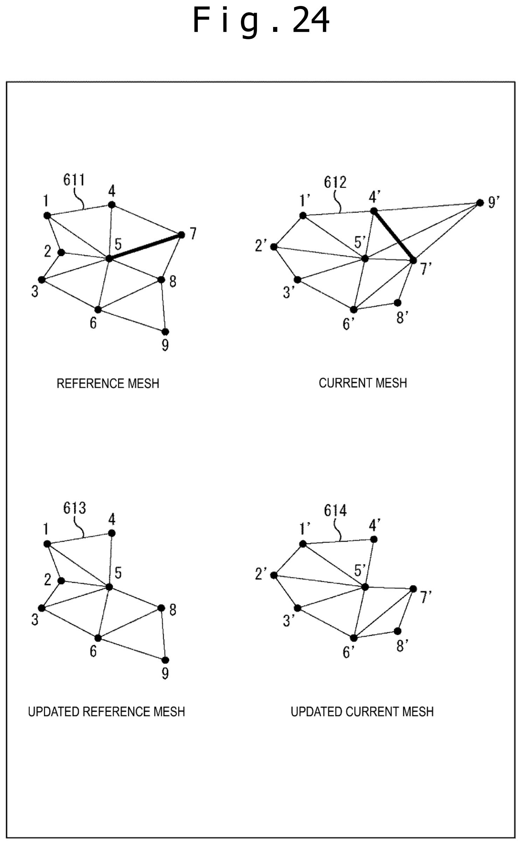

   Fig. 24 is a diagram for describing an application example of the present technology.
[Fig. 25]

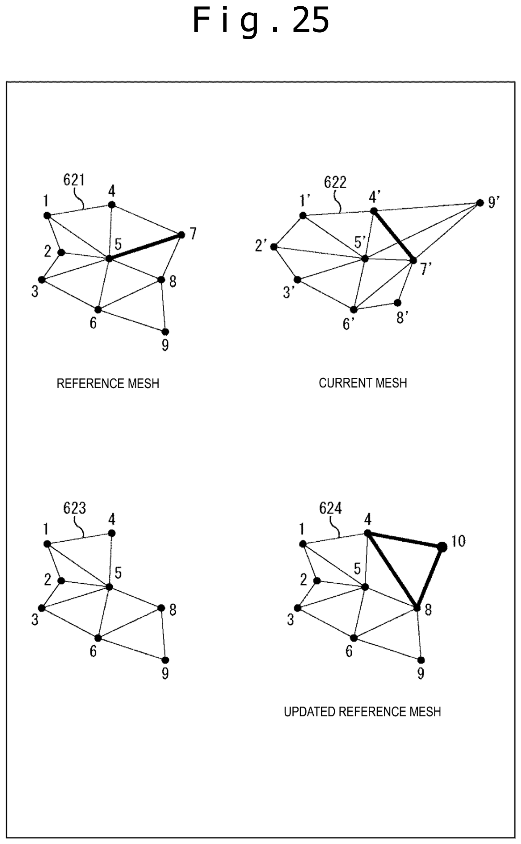

   Fig. 25 is a diagram for describing an application example of the present technology.
[Fig. 26]

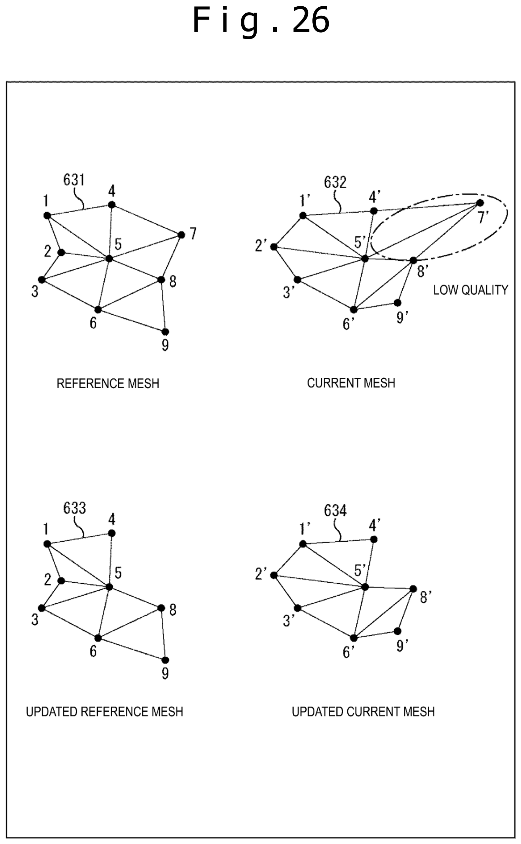

   Fig. 26 is a diagram for describing an application example of the present technology.
[Fig. 27]

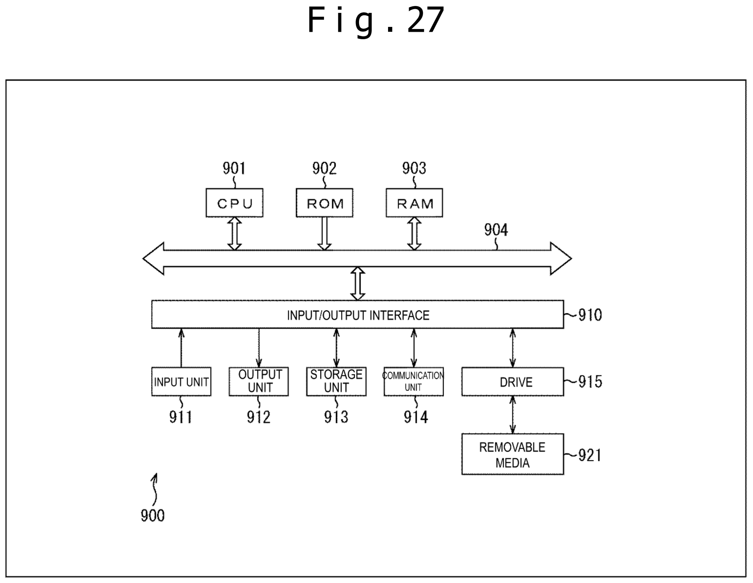

   Fig. 27 is a block diagram illustrating a main configuration example of a computer.

### Description of Embodiments

Hereinafter, modes for implementing the present disclosure (hereinafter, referred to as embodiments) will be described. The descriptions will be given in the following order.
1. Documents Supporting Technical Contents, Technical Terms, and the Like
2. Mesh Inter-Coding
3. Update of Reference Mesh
4. Application Example of Present Technology
5. Appendix

### 1. Documents Supporting Technical Contents, Technical Terms, and the Like

The scope disclosed in the present technology includes not only the contents described in the embodiments but also the contents described in the following NPLs and the like publicly known at the time of filing, the contents of other documents referred to in the following NPLs, and the like.

NPL 1: listed above.
NPL 2: listed above.
NPL 3: listed above.

That is, the contents described in the above-described NPLs, the contents of other documents referred to in the above-described NPLs, and the like are also grounds for determining support requirements.

### 2. Mesh Inter-Coding

### V-DMC

Known technologies include as 3D data representing a three dimensional structure of a three dimensional structure (an object of a three dimensional shape), a mesh representing the three dimensional shape of an object surface by forming a polygon by vertices and connections.

As illustrated in the upper left position of FIG. 1, in a mesh, a polygonal plane (polygon) is formed by vertices 11 and connections 12 connecting the vertices 11. The polygon (also referred to as a face) represents the surface of an object having a three dimensional structure, that is, the three dimensional shape of the object. Note that a texture 13 can be applied to each face of the mesh.

The data of the mesh is configured by information as illustrated in the lower row in FIG. 1, for example. Vertex information 14 illustrated in the leftmost position in the lower row in FIG. 1 is information indicating the three dimensional position (three dimensional coordinates (X, Y, Z)) of each vertex 11 constituting the mesh. Connection information 15 illustrated in the second leftmost position in the lower row in FIG. 1 is information indicating each connection 12 constituting the mesh. The texture image 16 illustrated in the third leftmost position in the lower row in FIG. 1 is map information of texture 13 attached to each face. A UV map 17 illustrated in the fourth leftmost position in the lower row in FIG. 1 is information indicating a correspondence relationship between the vertex 11 and the texture 13. The UV map 17 indicates the coordinates (UV coordinates) of each vertex 11 in the texture image 16.

Encoding methods for such a mesh include, for example, Video-based Dynamic Mesh Coding (V-DMC) as disclosed in NPL 1.

In V-DMC, a mesh to be encoded is represented by a coarse base mesh and displacement vectors of division points obtained by subdividing the base mesh, and the base mesh and the displacement vectors are encoded.

For example, an original mesh as illustrated in the uppermost row in FIG. 2 is assumed to be present. In FIG. 2, black dots indicate vertices, and lines connecting the black dots indicate connections. As described above, the mesh originally forms polygons by vertices and connections, but here, for convenience of description, the mesh is described as a group of vertices connected linearly (in series).

By decimating some vertices of the original mesh, a coarse mesh as illustrated in the second row from the top of FIG. 2 is formed. This is referred to as a base mesh.

By subdividing each mesh of the base mesh, vertices are added as illustrated in the third row from the top of FIG. 2. Here, the number of vertices added by this subdivision is assumed to be equal to the number of vertices decimated from the original mesh. This results in a mesh with the same number of vertices as the original mesh. In this specification, the added vertices are also referred to as division points.

However, since the connections are updated when the vertices of the original mesh are decimated, and the division points are formed on the updated connections, the shape of the subdivided base mesh is different from the shape of the original mesh. More specifically, as illustrated in the bottom row in FIG. 2, the positions of the division points (on the dotted line) are different from those of the original mesh. In this specification, the difference between the position of the division point and the position of the vertex of the original mesh is referred to as a displacement vector. The displacement vector is set for each vertex of the subdivided base mesh.

In an encoder, the original mesh is known, and thus the base mesh can be generated and such displacement vectors can be derived. A decoder can generate (restore) the original mesh (a mesh equivalent to the original mesh) by subdividing the base mesh and applying the displacement vectors to the respective vertices.

In this way, by reducing the number of vertices of the original mesh and encoding the resultant mesh as the base mesh, the code amount can be reduced. Additionally, the displacement vectors are stored in a two dimensional image and encoded using 2D encoding, thereby improving encoding efficiency. In the present specification, storing data in a two dimensional image is also referred to as packing.

In the present specification, being variable in the time direction is also referred to as being "dynamic". Additionally, being invariable in the time direction or having no concept of the time direction is also referred to as "being static". For example, a mesh representing the three dimensional shape of an object at a point of time is static. In a case where a plurality of meshes representing three dimensional shapes of an object at different points of time are defined as a sequence, the meshes are said to be dynamic in the sequence. That is, a dynamic mesh includes static meshes at a plurality of points of time. In the present specification, information at each point of time is also referred to as a frame. In other words, the dynamic mesh includes meshes of a plurality of frames.

In the present specification, the three dimensional shape of an object is assumed to be dynamic, and the mesh, which is 3D data of the object, is also assumed to be dynamic. In other words, an encoding target is assumed to be a dynamic mesh. In other words, the base mesh and the displacement vectors are also dynamic, and each of the displacement vectors is encoded as a moving image including two dimensional images thereof as frames. In this specification, the moving image is also referred to as a displacement video.

Note that the displacement vectors may be packed in a two dimensional image as transform coefficients obtained by coefficient transform such as wavelet transform. The displacement vector may be quantized. For example, the displacement vectors may be transformed into transform coefficients by wavelet transform, the transform coefficients may be quantized, and the quantized transform coefficients (quantized coefficient) may be packed.

### Encoding of Base Mesh

Methods of encoding the base mesh include intra-coding in which encoding is performed independently for each frame and inter-coding in which encoding is performed using a correlation between frames. In general, the inter-coding has higher coding efficiency than the intra-coding. However, in order to apply the inter-coding, the mesh topology (graph structure), that is, the number of vertices and the connections between the vertices, must be matched between a current frame and a reference frame. In the related art, it is difficult for the mesh topology (hereinafter, also simply referred to as topology) of the entire frame to remain matched for a long period of time. Accordingly, the inter-coding may fail to be applied, leading to reduced coding efficiency. Additionally, even in a case where the inter-coding is applied, inter-prediction may be completed in a short period of time as in a bit stream 31 illustrated in FIG. 3, leading to reduced coding efficiency.

### Sub-Meshing

In recent years, as disclosed in NPL 2 and NPL 3, for example, a method has been proposed in which one frame is divided into a plurality of sub-meshes (patches) and the sub-meshes are encoded independently of each other. For example, as illustrated in FIG. 4, a mesh 41 is divided into a sub-mesh 42 and a sub-mesh 43, and the sub-meshes are encoded independently of each other. In this way, an encoding method can be selected for each sub-mesh. Therefore, an encoding method can be selected that is more suitable for the feature of the shape of the mesh.

For example, a base mesh 50 is assumed to be present that represents a face portion of a person as illustrated on the left side of FIG. 5. The base mesh 50 is assumed to include a head 51 having a relatively simple three dimensional shape and hair 52 having a relatively complex three dimensional shape. In general, sufficiently high correlation between frames causes the inter-coding to have higher coding efficiency than the intra-coding. The head 51 has a relatively simple three dimensional shape and is likely to have high correlation between frames. Thus, the head 51 is suitable for the inter-coding. In contrast, the hair 52 has a relatively complicated three dimensional shape, is likely to have low correlation between frames. Thus, the hair 52 is not suitable for the inter-coding. Accordingly, in a case where the base mesh 50 is encoded, the effect of the hair 52 reduces the correlation between the frames to allow the intra-coding to be easily applied. This may reduce the coding efficiency. Additionally, even in a case where the inter-coding is applied, the inter-coding may not last long and switching may occur between the inter-coding and the intra-coding every several frames. Thus, the coding efficiency may be reduced.

In such a case, as illustrated on the right side of FIG. 5, by sub-meshing the head 51 and the hair 52 and independently encoding the head 51 and the hair 52, the inter-coding can be selected for the head 51 and suppress a decrease in encoding efficiency.

In other words, as illustrated in FIG. 6, a sub-mesh A and a sub-mesh B are encoded independently of each other, and thus bit streams can be generated independently for the respective sub-meshes like a bit stream 61 and a bit stream 62. Accordingly, the encoding methods can be selected independently for the respective sub-meshes. Therefore, for example, by sub-meshing a portion where the topology remains matched for a long period of time, long-term inter-coding can be realized, allowing a decrease in coding efficiency to be suppressed.

However, the sub-meshes are set for all the intervals of the sequence, and thus it is difficult to flexibly control a processing target range of the inter-coding and inter-decoding in the time direction. For example, in the case of FIG. 6, the configuration of the sub-mesh A and the sub-mesh B is maintained throughout the sequence. In other words, both the bit stream 61 and the bit stream 62 of each sub-mesh are bit streams in units of sequences.

Accordingly, for example, dividing only a certain interval (frame interval) into regions is impossible. Even in such a case, the sub-meshes need to be formed throughout the sequence. Additionally, portions in the sequence that are to be sub-meshes cannot be changed. For example, in a case where division positions of the mesh are to be changed within the sequence, each division pattern needs to be sub-meshed. Therefore, the coding efficiency may decrease due to sub-meshes in unnecessary intervals, an increased number of sub-meshes, the occurrence of an overlapping region, and the like. Additionally, the first sub-mesh includes no sub-mesh that can be referred to, and thus needs to be subjected to the intra-prediction. This may reduce the coding efficiency.

### 3. Update of Reference Mesh

### Method 1

Thus, as illustrated in the uppermost row of the table in FIG. 7, the reference mesh is updated on the basis of the control information for controlling the processing target range of the inter-coding and the inter-decoding of the dynamic mesh, and the updated reference mesh is applied to the inter-coding and the inter-decoding of the current mesh (method 1). Note that in the present specification, the current mesh indicates a mesh of the current frame (that is, a mesh to be encoded). Additionally, the reference mesh refers to a mesh of another frame (reference frame) that is referred to during the inter-coding and inter-decoding of the current mesh. Additionally, the reference mesh updated based on the control information is also referred to as an updated reference mesh.

### Encoding Apparatus

FIG. 8 is a block diagram illustrating an example of a configuration of an encoding apparatus that is an aspect of the information processing apparatus to which the present technology (the above-described method 1) is applied. The encoding apparatus 100 illustrated in FIG. 8 is an apparatus that encodes a dynamic mesh. The encoding apparatus 100 acquires the current mesh of the dynamic mesh, encodes the current mesh to generate a bit stream, and outputs the bit stream.

Note that FIG. 8 illustrates main processing units, main data flows, and the like, and not all of the units and flows are illustrated in FIG. 8. In other words, in the encoding apparatus 100, there may be a processing unit that is not illustrated as a block in FIG. 8, or there may be a flow of processing or data that is not illustrated as an arrow or the like in FIG. 8.

As illustrated in FIG. 8, the encoding apparatus 100 includes a control unit 101, an encoding method selection unit 111, a control information supply unit 112, a control information encoding unit 113, a reference mesh update unit 114, an inter-coding unit 115, an intra-coding unit 116, and a multiplexer 117.

The control unit 101 controls the processing units (from the encoding method selection unit 111 to the multiplexer 117) in the encoding apparatus 100. In other words, the processing units from the encoding method selection unit 111 to the multiplexer 117 are appropriately controlled by the control unit 101 to execute processing.

The encoding method selection unit 111 performs processing related to selection of an encoding method for the mesh. For example, the encoding method selection unit 111 acquires a current mesh (that is, an encoding target) of a dynamic mesh supplied from the outside of the encoding apparatus 100. The encoding method selection unit 111 selects an encoding method for the current mesh according to a predetermined method. In other words, the encoding method selection unit 111 selects whether to perform inter-coding or intra-coding on the current mesh. Note that any method may be used as the selection method. In a case of selecting the inter-coding, the encoding method selection unit 111 supplies the current mesh to the inter-coding unit 115. Additionally, in a case of selecting the intra-coding, the encoding method selection unit 111 supplies the current mesh to the intra-coding unit 116.

The control information supply unit 112 performs processing related to supply of control information. This control information is information for controlling the processing target range of the inter-coding and the inter-decoding of the mesh, which will be described in detail later. This control information may be generated or supplied from another apparatus. In a case of generating control information, the control information supply unit 112 can also be referred to as a control information generation unit. Additionally, in a case of acquiring the control information from the outside of the encoding apparatus 100, the control information supply unit 112 can also be referred to as a control information acquisition unit. Any method may be used to generate the control information. For example, the control information may be manually generated by a user (for example, a creator of the mesh) or the like, may be generated on the basis of the mesh of the encoding target, may be generated on the basis of contents (a situation in which a scene or an action occurs, or the like), may be generated according to a load situation of the encoding apparatus 100, or may be generated according to a situation other than the encoding apparatus 100 such as a load of reproduction processing, a bandwidth of a network serving as a transmission path, or the like. Note that the control information is associated with any frame of the dynamic mesh to be encoded. In other words, control information may be provided for any frame of the dynamic mesh. The control information supply unit 112 supplies the control information to the control information encoding unit 113 and the reference mesh update unit 114 at an appropriate timing.

The control information encoding unit 113 performs processing related to encoding of control information. For example, the control information encoding unit 113 encodes the control information supplied from the control information supply unit 112. The control information encoding unit 113 encodes the control information to generate control information encoded data. Any method may be used as the encoding method. The control information encoding unit 113 supplies the generated control information encoded data to the multiplexer 117.

The reference mesh update unit 114 performs processing related to update of the reference mesh. For example, in a case where the encoding method selection unit 111 selects the inter-coding, the reference mesh update unit 114 acquires and holds the control information supplied from the control information supply unit 112. The control information corresponding to the current mesh (current frame) is supplied from the control information supply unit 112. In other words, the control information supply unit 112 can be said to set the control information corresponding to the current mesh in the reference mesh update unit 114. Additionally, the reference mesh update unit 114 acquires a reference mesh corresponding to the current mesh. In other words, the reference mesh update unit 114 acquires the mesh of the reference frame referred to by the current frame in the inter-coding. The reference mesh may be obtained from anywhere. For example, the mesh may be the current mesh held after being acquired from the outside of the encoding apparatus 100 (that is, the mesh input to the encoding apparatus 100 in the past), or may be a mesh obtained by locally decoding a mesh encoded in the past. The reference mesh update unit 114 updates the reference mesh based on the control information. The reference mesh update unit 114 supplies the updated reference mesh to the inter-coding unit 115.

The inter-coding unit 115 performs processing related to the inter-coding. For example, the inter-coding unit 115 acquires the current mesh supplied from the encoding method selection unit 111. The inter-coding unit 115 also acquires the updated reference mesh supplied from the reference mesh update unit 114. The inter-coding unit 115 performs inter-coding on the current mesh using the updated reference mesh. At this time, the inter-coding unit 115 performs inter-coding on only a portion of the current mesh corresponding to the updated reference mesh (having the matched topology). For example, in a case where the updated reference mesh corresponds to the entire current mesh, the inter-coding unit 115 performs inter-coding on the entire current mesh. Additionally, in a case where the updated reference mesh corresponds to a portion of the current mesh, the inter-coding performs inter-coding on the portion of the current mesh. In that case, the remaining portion of the current mesh is encoded separately. For example, the inter-coding unit 115 may use a reference mesh different from the updated reference mesh to perform inter-coding on the remaining portion. Additionally, in a case where the remaining portion is intra-coded, the inter-coding unit 115 may supply the remaining portion to the intra-coding unit 116. The inter-coding unit 115 supplies the multiplexer 117 with inter-coded data, which is encoded data generated by performing inter-coding on (a part or all of) the current mesh.

The intra-coding unit 116 performs processing related to intra-coding. For example, the intra-coding unit 116 acquires the current mesh supplied from the encoding method selection unit 111. The intra-coding unit 116 performs intra-coding on the current mesh. The intra-coding unit 116 may acquire a mesh (a part of the current mesh) supplied from the inter-coding unit 115 and perform intra-coding thereon. Any method may be used to perform intra-coding on a mesh. The intra-coding unit 116 supplies the multiplexer 117 with intra-coded data, which is encoded data generated by performing intra-coding on (a part or all of) the current mesh.

The multiplexer 117 performs processing related to generation of a bit stream. For example, the multiplexer 117 acquires the control information encoded data supplied from the control information encoding unit 113. The multiplexer 117 acquires the inter-coded data supplied from the inter-coding unit 115. The multiplexer 117 acquires the intra-coded data supplied from the intra-coding unit 116. The multiplexer 117 multiplexes the acquired control information encoded data, inter-coded data, and intra-coded data to generate a bit stream. The multiplexer 117 outputs the generated bit stream to the outside of the encoding apparatus 100. The bit stream may be stored in an external storage device, or may be transmitted to a decoder or the like via any transmission path such as a network or a computer.

The present technology (the above-described method 1) may be applied to the encoding apparatus 100 having such a configuration. For example, the control information encoding unit 113 of the encoding apparatus 100 may encode control information for controlling a processing target range of inter-coding and inter-decoding of a mesh representing a three dimensional structure of an object, the reference mesh update unit 114 may update, on the basis of the control information, a reference mesh that is a mesh to be referred to during inter-coding, and the inter-coding unit 115 may perform inter-coding on a current mesh that is a mesh of a current frame, using an updated reference mesh that is the reference mesh that has been updated.

With such a configuration, the encoding apparatus 100 can perform inter-coding on a part of the current mesh without sub-meshing. Therefore, the encoding apparatus 100 can suppress a decrease in encoding efficiency.

At this time, the reference mesh update unit 114 may update the reference mesh in an update interval designated by the control information. For example, the reference mesh update unit 114 may define a frame associated with the control information as a start frame of the update interval in which a reference mesh is updated, and update the reference mesh in the update interval. As described above, the control information may be associated with any frame of the dynamic mesh. Therefore, the update interval may start from any frame. In this way, the reference mesh update unit 114 can update the reference mesh in a certain interval in the sequence. In other words, the inter-coding unit 115 can perform inter-coding on a part of the current mesh in the certain interval. Therefore, the encoding apparatus 100 can suppress a decrease in encoding efficiency.

Any processing may be used to update the reference mesh. For example, the face of the reference mesh may be deleted. For example, the control information may include information designating a deletion target face that is a face to be deleted. The reference mesh update unit 114 may delete the deletion target face designated by the control information from the reference mesh in the update interval described above. In this way, the reference mesh update unit 114 can reduce the face of the reference mesh.

The deletion target face may be designated in any manner. For example, the control information may include, as the information designating the deletion target face, information indicating a reference vertex and the number of links from the reference vertex. For example, in the control information for the mesh 201 illustrated in FIG. 9, a reference point is assumed to be designated as the P10 and the number of links is assumed to be designated as 1. In this case, the reference mesh update unit 114 interprets that P7, P8, P9, and P10 indicated by white dots in the mesh 201 are designated as target vertices, and faces corresponding to the target vertices are designated as deletion target faces. Additionally, for example, in the control information for the mesh 202 illustrated in FIG. 9, the reference point is assumed to be designated as the P10 and the number of links is assumed to be designated as 2. In this case, the reference mesh update unit 114 interprets that P4, P5, P6, P7, P8, P9, and P10 indicated by white dots in the mesh 201 are designated as target vertices, and faces corresponding to the target vertices are designated as deletion target faces. In this way, by using (reference) vertices and the number of links, the deletion target face can be designated according to the structure of the mesh. For example, vertices that are, in spite of a short physical distance, far due to the structure of the mesh (the number of links between the reference vertex and a vertex in question is large) may have little relationship with each other in the object (belong to faces that are far from each other). Such a vertex can be excluded from the target vertices.

Note that the deletion target face and the target vertex may be in any relationship. For example, a face in which all vertices are target vertices may be the deletion target face. In other words, the reference mesh update unit 114 may define, as the target vertices, vertices starting with the reference vertex designated by the control information and linked together in such a manner that the number of links is within the number designated by the control information, and may define, as the deletion target face, a face including only the target vertices. For example, in the control information for the mesh 203 illustrated in FIG. 10, the reference point is assumed to be designated as the P10 and the number of links is assumed to be designated as 1. In this case, the reference mesh update unit 114 defines P7, P8, P9, and P10 indicated by white dots as the target vertices, and defines, as the deletion target faces, a face surrounded by connections connecting the target vertex P7, the target vertex P8, and the target vertex P10 and a face surrounded by connections connecting the target vertex P8, the target vertex P9, and the target vertex P10. In other words, the face indicated by the gray background of the mesh 203 is defined as the deletion target face.

Additionally, a face in which one or more vertices are target vertices may be the deletion target face. In other words, the reference mesh update unit 114 may define, as the target vertices, vertices starting with the reference vertex designated by the control information and linked together in such a manner that the number of links is within the number designated by the control information, and may define, as the deletion target face, a face including vertices including the target vertex. For example, in the control information for the mesh 204 illustrated in FIG. 10, the reference point is assumed to be designated as P10 and the number of links is assumed to be designated as 1. In this case, the reference mesh update unit 114 defines P7, P8, P9, and P10 indicated by white dots as the target vertices, and defines, as the deletion target face, a face surrounded by connections connecting the target vertex P7, the target vertex P8, and the target vertex P10, a face surrounded by connections connecting the target vertex P8, the target vertex P9, and the target vertex P10, a face surrounded by connections connecting the target vertex P5, the target vertex P7, and the target vertex P8, a face surrounded by connections connecting the target vertex P6, the target vertex P8, and the target vertex P9, a face surrounded by connections connecting the target vertex P4, the target vertex P5, and the target vertex P7, and a face surrounded by connections connecting the target vertex P5, the target vertex P6 and the target vertex P8. In other words, the face indicated by the gray background of the mesh 204 is defined as the deletion target face.

Additionally, the control information may include, as the information designating the deletion target face, information indicating a three dimensional space region. For example, in the control information, a rectangular region 211 illustrated in FIG. 11 may be indicated as the information designating the deletion target face. The vertices in the rectangular region 211 are designated as the target vertices. Any method may be used to designate the rectangular region 211. For example, the rectangular region 211 may be designated by using the coordinates of two diagonal vertices (for example, the vertex Q1 and the vertex Q2). Alternatively, the rectangular region 211 may be designated by using the coordinate of the vertex Q1 and the lengths of the three sides (X, Y, Z) of the rectangular region 211. It is obvious that any other method may be used. Additionally, the shape of the three dimensional space region indicating the deletion target face is optional, and may be a shape other than the rectangle as illustrated in FIG. 11. For example, the three dimensional space region may be spherical or cylindrical, or may have any other shape. By designating the target vertices using the three dimensional space region in this manner, the target vertices can be designated according to the physical distance regardless of the configuration of the mesh. Therefore, for example, a vertex group whose distance (the number of links) from the reference vertex is not constant in the mesh structure can be designated as the target vertices.

In this way, even in a case where the deletion target face (target vertices) is designated using the three dimensional space region, the correspondence between the deletion target face and the target vertices may be in any relationship as in the case of using the reference vertex and the number of links described above. For example, a face in which all vertices are target vertices may be the deletion target face. In other words, the reference mesh update unit 114 may define, as the target vertices, the vertices located in the three dimensional space region designated by the control information, and define, as the deletion target face, a face including only the target vertices. For example, a rectangular region 221 illustrated in FIG. 11 is assumed to be designated by the control information. In this case, the reference mesh update unit 114 defines the vertices in the rectangular region 221 as the target vertices, and defines, as the deletion target face, the face 222 surrounded by the connections connecting the target vertices. In this case, the face 223 is not included in the deletion target face.

Additionally, a face in which one or more vertices are target vertices may be the deletion target face. In other words, the reference mesh update unit 114 may define, as the target vertices, the vertices located in the three dimensional space region designated by the control information, and define, as the deletion target face, a face including vertices including the target vertices. For example, the rectangular region 211 illustrated in FIG. 11 is assumed to be designated by the control information. In this case, the reference mesh update unit 114 defines the vertices in the rectangular region 211 as the target vertices, and defines, as the deletion target faces, the face 212 and the face 213 surrounded by the connections connecting the vertices including the target vertices.

When the deletion target face is set as described above, the reference mesh update unit 114 updates the reference mesh by deleting the deletion target face. For example, when faces indicated by a gray background in the mesh 203 of FIG. 10 are defined as the deletion target faces, the reference mesh update unit 114 deletes the deletion target faces to generate an updated reference mesh including the vertices P1 to P9 and connections between the vertices, such as a mesh 231 illustrated in FIG. 12.

The inter-coding unit 115 performs inter-coding of the current mesh using the updated reference mesh. For example, the current mesh is assumed to be a mesh including vertices P1' to P10', such as a mesh 232 illustrated in FIG. 12. In a case where the vertices P1' to P9' of the mesh 232 correspond to the vertices P1 to P9 of the mesh 231, respectively, the topology of the mesh 231 matches that of the portion of the mesh 232 including the vertices P1' to P9' and the connections between the vertices. Therefore, the inter-coding unit 115 uses the updated reference (mesh 231) to perform inter-coding on the portion of the mesh 232 including the vertices P1' to P9' and the connections between the vertices. In this way, even though the topologies of the entire meshes are not matched, the encoding apparatus 100 updates the reference mesh (deletes some faces) to enable easy extraction of the portion where the topology remains matched between the frames, and can more easily apply the inter-coding. Therefore, a decrease in coding efficiency can be suppressed.

Note that the update of the reference mesh is not limited to the deletion of the face. For example, a face may be added. For example, information designating an addition target face that is a face to be added may be included in the control information. The reference mesh update unit 114 may add an addition target face designated by the control information, to the reference mesh in the update interval described above. For example, a reference mesh 241 illustrated in FIG. 13 is assumed to include the vertices P1 to P10 and the connections between the vertices. A face indicated by a gray background may be added to the reference mesh 241 as described above. In this way, the reference mesh update unit 114 can increase the faces of the reference mesh.

Any method may be used to designate the addition target face. For example, the control information may include, as information designating the addition target face, information indicating an addition vertex that is a vertex to be added and information indicating an addition link that is a link to be added. In the case of the example of the reference mesh 241 in FIG. 13, the control information may include information indicating P11 as an addition vertex, and information indicating, as addition links, a link (connection) between the vertex P7 and the vertex P11 and a link (connection) between the vertex P10 and the vertex P11.

The update of the reference mesh may be deletion and addition of faces. For example, the control information may include information designating a deletion target face that is a face to be deleted and information designating an addition target face that is a face to be added. In the update interval described above, the reference mesh update unit 114 may delete, from the reference mesh, the deletion target face designated by the control information, and may further add, to the reference mesh, the addition target face designated by the control information. The method of designating the deletion target face is as described above. Additionally, the method of designating the addition target face is as described above. In other words, as the update of the reference mesh, the deletion and the addition described above may be applied in combination. For example, as in a reference mesh 242 in FIG. 13, a face including the vertex P10 may be deleted, and a face including the vertex P11 may be newly added. In this way, the reference mesh update unit 114 can change the face of the reference mesh.

Additionally, an end frame of the update interval may be designated in the control information. As described above, the start frame of the update interval is designated as a frame to which the control information belongs. Therefore, in the control information, designation of the end frame is also said to designate the length of the update interval. Additionally, since the start frame and the end frame are designated, the designation is said to correspond to specification of from where to where of the sequence (specification of which frame interval corresponds to the update interval) (in other words, the update interval itself, or the position of the update interval). The reference mesh update unit 114 defines, as the update interval, an interval from a frame associated with the control information to an end frame designated by the control information, and updates the reference mesh in the update interval as described above. Therefore, as illustrated in FIG. 14, any face or vertex of the reference mesh can be updated only in a certain frame interval.

For example, as in a bit stream 251 illustrated in FIG. 15, even in a case where the mesh A is not divided into sub-meshes, a portion of any frame can be easily excluded from inter-coding (at least reference of the same reference mesh is avoided). Additionally, in any frame, a reference destination of the portion can be returned to the original reference mesh.

In other words, only a portion of the reference mesh that is necessary both temporally and spatially can be updated. In other words, more flexible control can be performed on the reference mesh. Such control of the reference mesh enables an increase in the number of frames referring to the common reference mesh (the number of frames having the matched topology), allowing the inter-coding to be more easily applied. Additionally, the sub-meshing is not performed, and thus the intra-coding need not be performed in an unnecessarily narrow region, and a decrease in the coding efficiency of the intra-coding can be suppressed.

Additionally, unlike a bit stream 252 of the sub-mesh B (meaning a partial region. In practice, the sub-meshing is not performed) and a bit stream 253 of the sub-mesh C (similar to the sub-mesh B), the sequence need not match the sequence of the mesh A, and generating a bit stream of only a necessary portion is sufficient. Thus, a decrease in coding efficiency can be suppressed. Additionally, even without the sub-meshing, the decoding of the region of the mesh A corresponding to the sub-mesh B can be omitted (only the information to be reproduced may be decoded), and thus, an increase in the load of the reproduction processing can be suppressed.

Additionally, as illustrated in FIG. 15, such control (change of the encoding method for a certain region) can be performed during the inter-coding interval (without the need to end the inter-coding of the mesh A before performing the intra-coding). Therefore, a decrease in coding efficiency can be suppressed.

Although the deletion and addition of faces (or a combination thereof) have been described above as examples of updating the reference mesh, any method may be used for updating, and the update method is not limited to these examples. For example, the face may be rotated or reversed. The face may also be enlarged or reduced. The face may also be moved or deformed. The face may also be subdivided, or a plurality of faces may be combined into one face. Furthermore, a plurality of update methods may be applied in combination. The vertices and connections may be updated to achieve such face update.

As described above, the inter-coding unit 115 performs inter-coding on the current mesh using the updated reference mesh. Since the inter-coding in this case is mesh coding, the inter-coding unit 115 may derive motion vectors of corresponding vertices between frames and encode the motion vectors. In other words, the inter-coding unit 115 may derive motion vectors of corresponding vertices between the updated reference mesh and the current mesh, and encode the motion vectors. In other words, the motion vector indicates how the vertex has moved from the reference frame to the current frame. The motion vector is derived for each vertex. Any encoding method may be used to encode the motion vector.

The inter-coding unit 115 performs inter-coding on a portion, of the current mesh, corresponding to the updated reference mesh. Therefore, in a case where the updated reference mesh corresponds to a portion of the current mesh, a portion of the current mesh does not correspond to the updated reference mesh (non-corresponding portion) The non-corresponding portion is not subjected to the inter-coding for the portion corresponding to the updated reference mesh. Thus, the encoding apparatus 100 may further include a non-corresponding portion encoding unit that encodes a portion, of the current mesh, that does not correspond to the updated reference mesh. In this way, the encoding apparatus 100 can encode the entire current mesh. Therefore, a decrease in coding efficiency can be suppressed.

Note that the non-corresponding portion may be intra-coded. In other words, the non-corresponding portion encoding unit may performs intra-coding on the portion, of the current mesh, that does not correspond to the updated reference mesh. In other words, the intra-coding unit 116 may be the non-corresponding portion encoding unit.

Additionally, the non-corresponding portion may be inter-coded. In other words, the non-corresponding portion encoding unit may perform inter-coding on the portion, of the current mesh, that does not correspond to the updated reference mesh. In other words, the inter-coding unit 115 may be the non-corresponding portion encoding-unit, and may perform inter-coding on the non-corresponding portion independently of the corresponding portion.

In other words, in the example of FIG. 15, the first frames of the bit stream 252 and the bit stream 253 are intra-coded, but may be inter-coded. In this case, a mesh of any frame decoded before the mesh A may be used as the reference mesh. Note that, in the example of FIG. 15, the bit stream 252 and the bit stream 253 are illustrated separately from the bit stream 251, but these may be multiplexed into one bit stream.

### Flow of Encoding Processing

An example of the flow of the encoding processing executed by the encoding apparatus 100 will be described with reference to a flowchart of FIG. 16.

When the encoding processing is started, in step S101, the encoding method selection unit 111 selects an encoding method (that is, whether to perform the intra-coding or the inter-coding) for the current frame.

In step S102, the control unit 101 determines whether to perform the inter-coding on the current mesh. In a case where the inter-coding is determined to be performed, the processing proceeds to step S103.

In step S103, the control information supply unit 112 sets the control information associated with the current frame.

In step S104, the control information encoding unit 113 encodes the control information associated with the current frame.

In step S105, the reference mesh update unit 114 updates the reference mesh with an update content corresponding to the current mesh on the basis of the control information.

In step S106, the inter-coding unit 115 performs inter-coding on the current mesh using the updated reference mesh.

In step S107, the inter-coding unit 115 or the intra-coding unit 116 encodes the remaining faces of the current mesh.

When the processing in step S107 is completed, the processing proceeds to step S109. Additionally, in a case where the inter-coding is determined not to be performed (the intra-coding is determined to be performed) in step S102, the processing proceeds to step S108.

In step S108, the intra-coding unit 116 performs intra-coding on the current mesh. When the processing in step S108 is completed, the processing proceeds to step S109.

In step S109, the multiplexer 117 performs multiplexing to generate a bit stream. In step S110, the multiplexer 117 outputs the bit stream. When the processing in the step S110 is completed, the encoding processing is completed.

The present technology (the above-described method 1) may be applied to such encoding processing. For example, in step S104, the control information encoding unit 113 encodes control information for controlling a processing target range of inter-coding and inter-decoding of a mesh representing a three dimensional structure of an object. In step S105, on the basis of the control information, the reference mesh update unit 114 updates a reference mesh that is a mesh to be referred to during the inter-coding. In step S106, the inter-coding unit 115 performs inter-coding on a current mesh that is a mesh of a current frame, using an updated reference mesh that is the reference mesh that has been updated.

By executing each processing operation in this manner, the encoding apparatus 100 can perform inter-coding on a part of the current mesh without sub-meshing. Therefore, the encoding apparatus 100 can suppress a decrease in encoding efficiency.

### Decoding Apparatus

FIG. 17 is a block diagram illustrating an example of a configuration of a decoding apparatus which is an aspect of the information processing apparatus to which the present technology (the above-described method 1) is applied. A decoding apparatus 300 illustrated in FIG. 17 is an apparatus that decodes encoded data (bit stream) to generate (restore) a dynamic mesh. The decoding apparatus 300 acquires a bit stream, decodes the bit stream to generate a dynamic mesh, and outputs the dynamic mesh.

Note that FIG. 17 illustrates main processing units, main data flows, and the like, and not all of the units and flows are illustrated in FIG. 17. In other words, in the decoding apparatus 300, there may be a processing unit that is not illustrated as a block in FIG. 17, or there may be a flow of processing or data that is not illustrated as an arrow or the like in FIG. 17.

As illustrated in FIG. 17, the decoding apparatus 300 includes a control unit 301, a demultiplexer 311, a control information decoding unit 312, a reference mesh update unit 313, an inter-decoding unit 314, an intra-decoding unit 315, and a synthesis unit 316.

The control unit 301 controls each of the processing units (from the demultiplexer 311 to the synthesis unit 316) in the decoding apparatus 300. In other words, the processing units from the demultiplexer 311 to the synthesis unit 316 are controlled by the control unit 301 as appropriate to execute processing.

The demultiplexer 311 performs processing related to demultiplexing. For example, the demultiplexer 311 acquires a bit stream supplied from the outside of the decoding apparatus 300. The bit stream is generated by the encoding apparatus 100, and is obtained by encoding a dynamic mesh. The demultiplexer 311 demultiplexes the bit stream and extracts control information encoded data, inter-coded data, and intra-coded data. Any demultiplexing method may be used as long as the method corresponds to the multiplexing method applied by the multiplexer 117 of the encoding apparatus 100. The demultiplexer 311 supplies the control information encoded data to the control information decoding unit 312. The demultiplexer 311 supplies the inter-coded data to the inter-decoding unit 314. The demultiplexer 311 supplies the intra-coded data to the intra-decoding unit 315.

The control information decoding unit 312 performs processing related to decoding of the control information encoded data. For example, the control information decoding unit 312 acquires the control information encoded data supplied from the demultiplexer 311. The control information decoding unit 312 decodes the control information encoded data to generate (restore) control information. Any decoding method may be used as long as the method corresponds to the method applied to the encoding of the control information by the control information encoding unit 113 of the encoding apparatus 100. The control information decoding unit 312 supplies the generated control information to the reference mesh update unit 313.

The reference mesh update unit 313 is a processing unit similar to the reference mesh update unit 114 of the encoding apparatus 100, and performs processing related to update of the reference mesh. For example, the reference mesh update unit 313 acquires the control information supplied from the control information decoding unit 312. The control information supplied from the control information decoding unit 312 corresponds to the current mesh (current frame). In other words, the control information decoding unit 312 can be said to set the control information corresponding to the current mesh in the reference mesh update unit 313. Additionally, the reference mesh update unit 313 acquires a reference mesh corresponding to the current mesh. In other words, the reference mesh update unit 313 acquires the mesh of the reference frame referred to by the current frame in the inter-coding. The reference mesh may be obtained from anywhere. For example, the mesh may have been obtained by decoding in the past. The reference mesh update unit 313 updates the reference mesh on the basis of the control information. The reference mesh update unit 313 supplies the updated reference mesh to the inter-decoding unit 314.

The inter-decoding unit 314 performs processing related to inter-decoding. For example, the inter-decoding unit 314 acquires the inter-coded data supplied from the demultiplexer 311. The inter-decoding unit 314 also acquires the updated reference mesh supplied from the reference mesh update unit 313. The inter-decoding unit 314 performs inter-decoding on the inter-coded data using the updated reference mesh, to generate (restore) the current mesh. However, the inter-decoding unit 314 generates (restores) only a portion, of the current mesh, corresponding to the updated reference mesh (having the matched topology). For example, in a case where the updated reference mesh corresponds to the entire current mesh, the inter-decoding unit 314 generates (restores) the entire current mesh by performing inter-decoding on the inter-coded data. Additionally, in a case where the updated reference mesh corresponds to a portion of the current mesh, the inter-decoding unit 314 generates (restores) the portion of the current mesh by performing inter-decoding on the inter-coded data. In that case, the remaining portion of the current mesh is decoded separately. For example, the inter-decoding unit 314 may use a reference mesh different from the updated reference mesh to perform the inter-decoding on the remaining portion. The remaining portion may be intra-decoded by the intra-decoding unit 315. The inter-decoding unit 314 supplies the synthesis unit 316 with (a part or all of) the current mesh generated (restored) by decoding the inter-coded data.

The intra-decoding unit 315 performs processing related to intra-decoding. For example, the intra-decoding unit 315 acquires the intra-coded data supplied from the demultiplexer 311. The intra-decoding unit 315 performs intra-decoding on the intra-coded data to generate a current mesh. Note that any intra-decoding method may be used as long as the method is a decoding method corresponding to the encoding method applied by the intra-coding unit 116 of the encoding apparatus 100. The intra-decoding unit 315 supplies (a part or all of) the generated current mesh to the synthesis unit 316.

The synthesis unit 316 performs processing related to generation of a dynamic mesh. For example, the synthesis unit 316 acquires the current mesh supplied from the inter-decoding unit 314. The synthesis unit 316 acquires the current mesh supplied from the intra-decoding unit 315. The synthesis unit 316 synthesizes the meshes of the respective frames (arranges the meshes in the time direction) to generate a mesh sequence (that is, a dynamic mesh). The synthesis unit 316 outputs the generated dynamic mesh to the outside of the decoding apparatus 300 as a decoding result. The output dynamic mesh may be stored in a storage medium, or may be supplied to a reproduction apparatus or the like via any transmission path such as a network or a computer, and may be rendered and displayed by the reproduction apparatus. The information may be used for other processing.

The present technology (the above-described method 1) may be applied to the decoding apparatus 300 having such a configuration. For example, the control information decoding unit 312 of the decoding apparatus 300 may decode the control information encoded data to generate control information for controlling a processing target range of inter-coding and inter-decoding of a mesh representing a three dimensional structure of an object. Additionally, on the basis of the control information, the reference mesh update unit 313 may update a reference mesh that is a mesh to be referred to during inter-decoding. Additionally, the inter-decoding unit 314 may use an updated reference mesh that is the reference mesh that has been updated, to perform inter-decoding on the encoded data, to generate a current mesh that is a mesh of the current frame.

With such a configuration, the decoding apparatus 300 can generate (restore) a part of the current mesh by performing inter-decoding on the inter-coded data without requiring sub-meshing. Therefore, the decoding apparatus 300 can suppress a decrease in coding efficiency.

At this time, the reference mesh update unit 313 may update the reference mesh in the update interval designated by the control information, as in the case of the reference mesh update unit 114. For example, the reference mesh update unit 313 may define a frame associated with the control information as a start frame of the update interval in which the reference mesh is updated, and update the reference mesh in the update interval. As described above, the control information may be associated with any frame of the dynamic mesh. Therefore, the update interval may start from any frame. In this way, the reference mesh update unit 313 can update the reference mesh in a certain interval in the sequence. In other words, the inter-decoding unit 314 can generate (restore) a part of the current mesh in the certain interval by the inter-decoding. Therefore, the decoding apparatus 300 can suppress a decrease in coding efficiency.

As in the case of the encoding apparatus 100, any processing may be used to update the reference mesh. For example, the face of the reference mesh may be deleted. For example, the control information may include information designating a deletion target face that is a face to be deleted. The reference mesh update unit 313 may delete the deletion target face designated by the control information from the reference mesh in the update interval described above. In this way, the reference mesh update unit 313 can reduce the faces of the reference mesh.

As in the case of the encoding apparatus 100, the deletion target face may be designated in any manner. For example, the control information may include, as the information designating the deletion target face, information indicating a reference vertex and the number of links from the reference vertex. In this manner, by using the reference vertex and the number of links, the deletion target face can be designated according to the structure of the mesh. For example, vertices that are, in spite of a short physical distance, far due to the structure of the mesh (the number of links between the reference vertex and a vertex in question is large) may have little relationship with each other in the object (belong to faces that are far from each other). Such a vertex can be excluded from the target vertices.

As in the case of the encoding apparatus 100, the deletion target face and the target vertex may be associated with each other in any relationship. For example, a face in which all vertices are target vertices may be the deletion target face. In other words, the reference mesh update unit 313 may define, as the target vertices, vertices starting with the reference vertex designated by the control information and linked together in such a manner that the number of links is within the number designated by the control information, and may define, as the deletion target face, a face including only the target vertices.

Additionally, as in the case of the encoding apparatus 100, a face in which one or more vertices are target vertices may be the deletion target face. In other words, the reference mesh update unit 313 may define, as the target vertices, vertices starting with the reference vertex designated by the control information and linked together in such a manner that the number of links is within the number designated by the control information, and may define, as the deletion target face, a face including vertices including the target vertices.

As described above in the description of the encoding apparatus 100, the control information may include information indicating a three dimensional space region as information designating the deletion target face. For example, in the control information, a rectangular region 211 illustrated in FIG. 11 may be indicated as the information designating the deletion target face. The vertices in the rectangular region 211 are designated as the target vertices. Any method may be used to designate the rectangular region 211. For example, the rectangular region 211 may be designated by using the coordinates of two diagonal vertices (for example, the vertex Q1 and the vertex Q2). Alternatively, the rectangular region 211 may be designated by using the coordinate of the vertex Q1 and the lengths of the three sides (X, Y, Z) of the rectangular region 211. It is obvious that any other method may be used. Additionally, the shape of the three dimensional space region indicating the deletion target face is optional, and may be a shape other than the rectangle as illustrated in FIG. 11. For example, the three dimensional space region may be spherical or cylindrical, or may have any other shape. By designating the target vertices using the three dimensional space region in this manner, the target vertices can be designated according to the physical distance regardless of the configuration of the mesh. Therefore, for example, a vertex group whose distance (the number of links) from the reference vertex is not constant in the mesh structure can be designated as the target vertices.

In this way, even in a case where the deletion target face (target vertices) is designated using the three dimensional space region, the correspondence between the deletion target face and the target vertices may be in any relationship as in the case of using the reference vertex and the number of links described above. For example, as in the case of the encoding apparatus 100, a face in which all vertices are target vertices may be the deletion target face. In other words, the reference mesh update unit 114 may define, as the target vertices, the vertices located in the three dimensional space region designated by the control information, and define, as the deletion target face, a face including only the target vertices.

Additionally, as in the case of the encoding apparatus 100, a face in which one or more vertices are target vertices may be the deletion target face. In other words, the reference mesh update unit 313 may define, as the target vertices, vertices located in the three dimensional space region designated by the control information, and define, as the deletion target face, a face including vertices including the target vertices.

When the deletion target face is set as described above, the reference mesh update unit 313 updates the reference mesh by deleting the deletion target face. For example, when faces indicated by a gray background in the mesh 203 of FIG. 10 are defined as the deletion target faces, the reference mesh update unit 114 deletes the deletion target faces to generate an updated reference mesh including the vertices P1 to P9 and connections between the vertices, such as a mesh 231 illustrated in FIG. 12.

The inter-decoding unit 314 performs the inter-decoding on the inter-coded data using the updated reference mesh. For example, the current mesh is assumed to be a mesh including vertices P1' to P10', such as a mesh 232 illustrated in FIG. 12. In a case where the vertices P1' to P9' of the mesh 232 correspond to the vertices P1 to P9 of the mesh 231, respectively, the topology of the mesh 231 matches that of the portion of the mesh 232 including the vertices P1' to P9' and the connections between the vertices. Therefore, the inter-decoding unit 314 performs the inter-decoding using the update reference (mesh 231), to generate (restore) a portion of the mesh 232 including the vertices P1' to P9' and the connections between the vertices. In this way, even in a case where the topologies of the entire meshes are not matched, the decoding apparatus 300 can easily extract the portions of the frames that include the matched topology by updating the reference mesh (deleting certain faces). Therefore, the decoding apparatus 300 can more easily apply the inter-decoding. Therefore, a decrease in coding efficiency can be suppressed.

Note that, as in the case of the encoding apparatus 100, the update of the reference mesh is not limited to the deletion of the face. For example, a face may be added. For example, information designating an addition target face that is a face to be added may be included in the control information. The reference mesh update unit 313 may add the addition target face designated by the control information, to the reference mesh in the update interval described above. In this way, the reference mesh update unit 313 can increase the faces of the reference mesh.

As in the case of the encoding apparatus 100, any method may be used to designate the addition target face. For example, the control information may include, as information designating the addition target face, information indicating an addition vertex that is a vertex to be added and information indicating an addition link that is a link to be added.

As in the case of the encoding apparatus 100, the update of the reference mesh may be deletion and addition of faces. For example, the control information may include information designating a deletion target face that is a face to be deleted and information designating an addition target face that is a face to be added. In the update interval described above, the reference mesh update unit 313 may delete, from the reference mesh, the deletion target face designated by the control information and may further add the addition target face designated by the control information to the reference mesh. The method of designating the deletion target face is as described above. Additionally, the method of designating the addition target face is as described above. In other words, as the update of the reference mesh, the deletion and the addition described above may be applied in combination. In this way, the reference mesh update unit 313 can change the face of the reference mesh.

Further, as in the case of the encoding apparatus 100, the end frame of the update interval may be designated in the control information. As described above, the start frame of the update interval is designated as a frame to which the control information belongs. Therefore, in the control information, designation of the end frame is also said to designate the length of the update interval. Additionally, since the start frame and the end frame are designated, the designation is said to correspond to specification of from where to where of the sequence (specification of which frame interval corresponds to the update interval) (in other words, the update interval itself, or the position of the update interval). The reference mesh update unit 313 defines, as the update interval, an interval from a frame associated with the control information to the end frame designated by the control information, and updates the reference mesh in the update interval as described above. Therefore, as illustrated in FIG. 14, any face or vertex of the reference mesh can be updated only in a certain frame interval.

As in the case of the encoding apparatus 100, the reference mesh update unit 313 can update only a portion of the reference mesh that is necessary both temporally and spatially. In other words, the reference mesh update unit 313 can more flexibly control the reference mesh. Such control of the reference mesh enables the decoding apparatus 300 to increase the number of frames that refer to the common reference mesh (can increase the number of frames having the matched topology), allowing the inter-decoding to be more easily applied. Additionally, the sub-meshing is not performed, and thus the intra-decoding need not be performed in an unnecessarily narrow region, and a decrease in the coding efficiency of the intra-decoding can be suppressed.

Additionally, unlike the bit stream 252 of the sub-mesh B (meaning a partial region. In practice, the sub-meshing is not performed) and the bit stream 253 of the sub-mesh C (similar to the sub-mesh B), the sequence need not match the sequence of the mesh A, and generating a bit stream of only a necessary portion is sufficient. Thus, a decrease in coding efficiency can be suppressed. Additionally, even without the sub-meshing, the decoding of the region of the mesh A corresponding to the sub-mesh B can be omitted (only the information to be reproduced may be decoded), and thus, an increase in the load of the reproduction processing can be suppressed.

Additionally, such control (change of the decoding method for a certain region) can be performed during the inter-decoding interval (without the need to end the inter-decoding of the mesh A before performing the intra-decoding). Therefore, a decrease in coding efficiency can be suppressed.

As in the case of the encoding apparatus 100, although the deletion and addition of faces (or a combination thereof) have been described above as examples of updating the reference mesh, any method may be used for updating, and the update method is not limited to these examples. For example, the face may be rotated or reversed. The face may also be enlarged or reduced. The face may also be moved or deformed. The face may also be subdivided, or a plurality of faces may be combined into one face. Furthermore, a plurality of update methods may be applied in combination. The vertices and connections may be updated to achieve such face update.

As described above, the inter-decoding unit 314 performs inter-decoding on the inter-coded data using the updated reference mesh. Since the inter-decoding in this case is mesh decoding, the inter-decoding unit 314 may decode the encoded data, generate motion vectors of corresponding vertices between the updated reference mesh and the current mesh, and add the motion vectors to the updated reference mesh to generate the current mesh. In other words, the motion vector indicates how the vertex has moved from the reference frame to the current frame. The motion vector is derived for each vertex. Any decoding method may be used to decode the motion vector as long as the decoding method corresponds to the inter-coding applied by the inter-coding unit 115.

The inter-decoding unit 314 decodes the inter-coded data to generate (restore) a portion, of the current mesh, corresponding to the updated reference mesh. Therefore, in a case where the updated reference mesh corresponds to a portion of the current mesh, a portion of the current mesh does not correspond to the updated reference mesh (non-corresponding portion). The non-corresponding portion is not subjected to the inter-decoding for the portion corresponding to the updated reference mesh. Thus, the decoding apparatus 300 may further include a non-corresponding portion decoding unit that decodes the encoded data to generate (restore) the portion, of the current mesh, that does not correspond to the updated reference mesh. In this way, the decoding apparatus 300 can decode the entire current mesh. Therefore, a decrease in coding efficiency can be suppressed.

Note that the non-corresponding portion may be intra-decoded. In other words, the non-corresponding portion encoding unit may decode the encoded data to generate (restore) the portion, of the current mesh, that does not correspond to the updated reference mesh. In other words, the intra-decoding unit 315 may be the non-corresponding portion decoding unit.

Additionally, the non-corresponding portion may be inter-decoded. In other words, the non-corresponding portion encoding unit may decode the encoded data to generate (restore) the portion of the current mesh that does not correspond to the updated reference mesh. In other words, the inter-decoding unit 314 may be a non-corresponding portion decoding unit, and may perform inter-decoding on the non-corresponding portion independently of the corresponding portion.

In other words, in the example of FIG. 15, the first frames of the bit stream 252 and the bit stream 253 are intra-decoded, but may be inter-decoded. In this case, a mesh of any frame decoded before the mesh A may be used as the reference mesh. Note that, in the example of FIG. 15, the bit stream 252 and the bit stream 253 are illustrated separately from the bit stream 251, but these bit streams may be multiplexed into one bit stream.

### Flow of Decoding Processing

An example of a flow of encoding processing executed by the decoding apparatus 300 will be described with reference to the flowchart of FIG. 18.

When the decoding processing is started, in step S301, the demultiplexer 311 demultiplexes the bit stream, and extracts the control information encoded data, the inter-coded data, and the intra-coded data.

In step S302, the control unit 301 determines whether to perform the inter-coding. In a case where the inter-coding is determined to be performed, the processing proceeds to step S303.

In step S303, the control information decoding unit 312 decodes the control information encoded data of the current frame to generate (restores) the control information.

In step S304, on the basis of the control information, the reference mesh update unit 313 updates the reference mesh with an update content corresponding to the current mesh.

In step S305, the inter-decoding unit 314 performs inter-decoding on the inter-coded data using the updated reference mesh, to generate (restore) a portion, corresponding to the updated reference mesh, of the current mesh.

In step S306, the inter-decoding unit 314 performs inter-decoding on the inter-coded data, or the intra-decoding unit 315 performs intra-decoding on the intra-coded data, to generate the remaining faces of the current mesh. When the processing in step S306 is completed, the processing proceeds to step S308. Additionally, in a case where the inter-coding is determined not to be performed (the intra-coding is determined to be performed) in step S302, the processing proceeds to step S307.

In step S307, the intra-decoding unit 315 performs the intra-decoding on the intra-coded data. When the processing in step S307 is completed, the processing proceeds to step S308.

In step S308, the synthesis unit 316 synthesizes (meshes of) the frames obtained by the inter-decoding or the intra-decoding, to generate a sequence in which the frames are arranged. That is, the synthesis unit 316 generates a dynamic mesh.

In step S309, the synthesis unit 316 outputs the dynamic mesh to the outside of the decoding apparatus 300. When the processing in the step S309 is completed, the decoding processing is completed.

By executing each processing operation in this manner, the decoding apparatus 300 can perform inter-decoding on a part of the current mesh without sub-meshing. Therefore, the decoding apparatus 300 can suppress a decrease in coding efficiency.

### 4. Application Examples of Present Technology

### Method 1-1

The present technology described above may be applied to any encoding scheme and decoding scheme. For example, as described in the second row from the top of the table illustrated in FIG. 7, the present technology may be applied to the inter-coding and the inter-decoding of the base mesh of V-DMC (Method 1-1).

### inter-coding unit

FIG. 19 is a diagram illustrating a main configuration example of the inter-coding unit 115 (FIG. 7) in the above-described case. Note that FIG. 19 illustrates main processing units, main data flows, and the like, and not all of the units and flows are illustrated in FIG. 19. In other words, in the inter-coding unit 115, there may be a processing unit that is not illustrated as a block in FIG. 19, or there may be a flow of processing or data that is not illustrated as an arrow or the like in FIG. 19.

As illustrated in FIG. 19, in this case, the inter-coding unit 115 includes a motion vector encoding unit 411, a base mesh reconstruction unit 412, a displacement vector correction unit 413, a packing unit 414, a displacement video encoding unit 415, a mesh reconstruction unit 416, an attribute map correction unit 417, an attribute video encoding unit 418, and a synthesis unit 419.

The motion vector encoding unit 411 generates motion vectors based on a vertex of the updated reference base mesh using the current base mesh and the updated reference base mesh. In other words, the motion vector encoding unit 411 generates motion vectors indicating displacement of each of the vertices between the current base mesh and the updated reference base mesh. The motion vector encoding unit 411 encodes the generated motion vectors, and supplies the encoded data to the base mesh reconstruction unit 412 and the synthesis unit 419.

The base mesh reconstruction unit 412 decodes the supplied encoded data of the motion vectors to generate (restore) the motion vectors. Then, the base mesh reconstruction unit 412 reconstructs the current base mesh using the updated reference base mesh and the motion vectors thereof. The reconstructed current base mesh contains coding distortion. The base mesh reconstruction unit 412 supplies the current base mesh to the displacement vector correction unit 413 and the mesh reconstruction unit 416.

The displacement vector correction unit 413 uses the supplied current base mesh (containing the coding distortion) to correct displacement vectors of division points. More specifically, the displacement vector correction unit 413 subdivides the supplied current base mesh (containing the coding distortion) to derive the division points. Then, the displacement vector correction unit 413 uses the derived division points to correct the displacement vectors of the division points supplied to the encoding apparatus 100. The displacement vector correction unit 413 supplies the packing unit 414 with displacement values of the division points obtained by the correction.

The packing unit 414 packs the supplied displacement vectors of the division points in a two dimensional image (also referred to as a frame image) of the current frame. At this time, the packing unit 414 may perform coefficient transform (for example, wavelet transform) on the displacement values of the division points and pack the transform coefficients in the two dimensional image. The packing unit 414 may also quantize the displacement vectors (or transform coefficients) of the division points and pack the quantized coefficients in the two dimensional image.

The packing unit 414 supplies the displacement video encoding unit 415 with the two dimensional image packed with the displacement vectors (or information corresponding to the displacement videos) of the division points. Additionally, the packing unit 414 supplies generated partial region information to the displacement video encoding unit 415.

The displacement video encoding unit 415 performs encoding using the supplied two dimensional image as a frame image, to obtain a moving image (displacement video). The displacement video encoding unit 415 supplies the encoded data of the displacement video generated to the mesh reconstruction unit 416 and the synthesis unit 419.

The mesh reconstruction unit 416 decodes the supplied encoded data of the displacement video, and performs unpacking or the like to derive the displacement vectors of the division points from the two dimensional image. Additionally, the mesh reconstruction unit 416 subdivides the supplied current base mesh to derive the displacement vectors of the division points and applies the derived displacement vectors of the division points to reconstruct the mesh. This mesh contains coding distortion. The mesh reconstruction unit 416 supplies the reconstructed mesh to the attribute map correction unit 417.

The attribute map correction unit 417 corrects an attribute map for texture or the like using the supplied mesh (containing coding distortion), and supplies the corrected attribute map to the attribute video encoding unit 418.

The attribute video encoding unit 418 performs encoding using the supplied attribute map as a frame image, to obtain a moving image (attribute video). The attribute video encoding unit 418 supplies the encoded data of the attribute video generated to the synthesis unit 419.

The synthesis unit 419 combines (multiplexes) the supplied encoded data of the motion vectors, the supplied encoded data of the displacement video, and the supplied encoded data of the attribute video to generate inter-coded data. The synthesis unit 419 outputs the generated inter-coded data to the outside of the inter-coding unit 115 (the multiplexer 117 (FIG. 7)).

The present technology may be applied to the encoding apparatus 100 including the inter-coding unit 115 having such a configuration. For example, the mesh may be a base mesh that is generated by decimating vertices of an original mesh to be encoded and that has a lower level of detail than the original mesh. Then, on the basis of the control information, the reference mesh update unit 114 may update a reference base mesh that is a base mesh to be referred to during the inter-coding and the inter-decoding. Then, the inter-coding unit 115 may perform inter-coding on a current base mesh that is a base mesh of the current frame, using an updated reference base mesh that is the reference base mesh that has been updated.

Additionally, in the inter-coding unit 115, the displacement video encoding unit 415 may encode the displacement video including frames packed with displacement vectors each indicating the positional difference between a respective one of the division points that are the vertices of the subdivided base mesh and a corresponding one of the vertices of the original mesh. Additionally, the attribute video encoding unit 418 may encode an attribute video including frames packed with attributes corresponding to the mesh.

With such a configuration, the inter-coding unit 115 can apply the present technology to the inter-coding of the base mesh of V-DMC. Therefore, the encoding apparatus 100 can suppress a decrease in encoding efficiency.

### Flow of Inter-Coding Processing

An example of the flow of the inter-coding processing executed in step S106 of FIG. 16 by the inter-coding unit 115 in this case will be described with reference to a flowchart of FIG. 20.

When the inter-coding processing is started, the motion vector encoding unit 411 generates motion vectors using the updated reference mesh and encodes the motion vectors in step S411.

In step S412, the base mesh reconstruction unit 412 decodes the motion vectors and reconstructs the current base mesh.

In step S413, the displacement vector correction unit 413 corrects the displacement vectors.

In step S414, the packing unit 414 packs the displacement vectors in the frame.

In step S415, the displacement video encoding unit 415 encodes the displacement video.

In step S416, the mesh reconstruction unit 416 reconstructs the mesh.

In step S417, the attribute map correction unit 417 corrects the attribute map.

In step S418, the attribute video encoding unit 418 encodes the attribute video.

In step S419, the synthesis unit 419 multiplexes each piece of the encoded data to generate inter-coded data.

When the processing of step S419 is completed, the inter-coding processing is completed, and the processing returns to FIG. 16.

By executing each processing operation in this way, the inter-coding unit 115 can apply the present technology to the inter-coding of the base mesh of V-DMC. Therefore, the encoding apparatus 100 can suppress a decrease in encoding efficiency.

### Inter-Decoding Unit

FIG. 21 is a block diagram illustrating an example of a configuration of the inter-decoding unit 314 (FIG. 17) that is an aspect of the information processing apparatus to which the present technology is applied. Note that FIG. 21 illustrates main processing units, main data flows, and the like, and not all of the units and flows are illustrated in FIG. 21. In other words, in the inter-decoding unit 314, there may be a processing unit that is not illustrated as a block in FIG. 21, or there may be a flow of processing or data that is not illustrated as an arrow or the like in FIG. 21.

As illustrated in FIG. 21, in this case, the inter-decoding unit 314 includes a demultiplexer 511, a motion vector decoding unit 512, a base mesh reconstruction unit 513, a subdivision unit 514, a displacement video decoding unit 515, an unpacking unit 516, a displacement vector application unit 517, and an attribute video decoding unit 518.

The demultiplexer 511 demultiplexes inter-coded data and extracts each piece of the encoded data included in the inter-coded data. For example, the demultiplexer 511 extracts the encoded data of the motion vectors from the inter-coded data, and supplies the encoded data to the motion vector decoding unit 512. The demultiplexer 511 also extracts the encoded data of the displacement video from the inter-coded data, and supplies the encoded data to the displacement video decoding unit 515. The demultiplexer 511 also extracts the encoded data of the attribute video from the bit stream, and supplies the encoded data to the attribute video decoding unit 518.

The motion vector decoding unit 512 decodes the supplied encoded data of the motion vectors to generate (restore) the motion vectors. The motion vector decoding unit 512 supplies the generated motion vectors to the base mesh reconstruction unit 513.

The base mesh reconstruction unit 513 applies the supplied motion vectors to the updated reference base mesh, and reconstructs the current base mesh (the portion corresponding to the updated reference base mesh). The base mesh reconstruction unit 513 supplies the reconstructed current base mesh to the subdivision unit 514. Note that the base mesh reconstruction unit 513 may supply the current base mesh to the outside of the decoding apparatus 300 or the like, and causes the decoding apparatus 300 to store the current base mesh to allow the current base mesh to be reused as a reference base mesh in a subsequent frame. Note that the reference base mesh may be generated from a decoded mesh.

The subdivision unit 514 subdivides the supplied base mesh on the basis of the supplied header information, and supplies the subdivided base mesh to the displacement vector application unit 517.

The displacement video decoding unit 515 decodes the supplied encoded data of the displacement video, and generates (restores) the displacement video (the current frame thereof). The displacement video decoding unit 515 supplies the generated displacement video (the current frame thereof) to the unpacking unit 516.

The unpacking unit 516 unpacks the displacement vectors of the division points from the current frame of the supplied displacement video. At this time, the unpacking unit 516 may unpack the transform coefficients and perform coefficient transform (for example, wavelet transform) on the transform coefficients to derive the displacement values of the division points. The unpacking unit 516 may also unpack the quantized coefficients and dequantize the quantized coefficients to derive the displacement values of the division points. The unpacking unit 516 may also unpack the quantized coefficients, dequantize the quantized coefficients to derive transform coefficients, and perform coefficient transform (for example, wavelet transform) on the transform coefficients to derive the displacement values of the division points. The unpacking unit 516 supplies the displacement vectors of the unpacked division points to the displacement vector application unit 517.

The displacement vector application unit 517 applies the supplied displacement values of the division points to the supplied division points of the base mesh (subdivided base mesh) to reconstruct the mesh (generate a decoded mesh). The displacement vector application unit 517 outputs the generated decoded mesh to the synthesis unit 316 (FIG. 17).

The attribute video decoding unit 518 decodes the supplied encoded data of the attribute video to generate (the current frame of) the attribute video. The attribute video decoding unit 518 outputs, to the synthesis unit 316 (FIG. 17), the generated current frame of the attribute video, that is, the attribute map corresponding to the decoded mesh.

The present technology may be applied to the decoding apparatus 300 including the inter-decoding unit 314 having such a configuration. For example, the mesh may be a base mesh that is generated by decimating vertices of an original mesh to be encoded and that has a lower level of detail than the original mesh. Then, on the basis of the control information, the reference mesh update unit 313 may update a reference base mesh that is a base mesh to be referred to during the inter-coding and inter-decoding. Then, the inter-decoding unit 314 may perform inter-decoding on the encoded data using an updated reference base mesh that is the reference base mesh that has been updated, to generate a current base mesh that is the base mesh of the current frame.

Additionally, in the inter-decoding unit 314, the displacement video decoding unit 515 may decode the encoded data and generate a displacement video including frames packed with displacement vectors each indicating the positional difference between a respective one of the division points that are the vertices of the subdivided base mesh and a corresponding one of the vertices of the original mesh. Additionally, the attribute video decoding unit 518 may generate an attribute video including frames packed with attributes corresponding to the mesh.

With such a configuration, the inter-decoding unit 314 can apply the present technology to the inter-decoding of the base mesh of the V-DMC. Therefore, the decoding apparatus 300 can suppress a decrease in coding efficiency.

### Flow of Inter-Decoding Processing

An example of the flow of the inter-decoding processing in this case executed in step S305 of FIG. 18 will be described with reference to a flowchart of FIG. 22.

When the inter-decoding processing is started, the demultiplexer 511 demultiplexes the inter-coded data in step S511.

In step S512, the motion vector decoding unit 512 decodes the encoded data of motion vectors to generate (restore) the motion vectors.

In step S513, the base mesh reconstruction unit 513 reconstructs the current base mesh using the updated reference base mesh.

In step S514, the subdivision unit 514 subdivides the current base mesh.

In step S515, the displacement video decoding unit 515 decodes the encoded data of the displacement video to generate (restore) a displacement video.

In step S516, the unpacking unit 516 unpacks the displacement vectors.

In step S517, the displacement vector application unit 517 applies the displacement vectors to the division points.

In step S518, the attribute video decoding unit 518 decodes the encoded data of the attribute video to generate an attribute map.

When the processing in step S518 is completed, the decoding processing is completed, and the processing returns to FIG. 18.

By performing the processing in this way, the inter-decoding unit 314 can apply the present technology to the inter-decoding of the base mesh of the V-DMC. Therefore, the decoding apparatus 300 can suppress a decrease in coding efficiency.

### Method 1-2

As described in the third row from the top of the table illustrated in FIG. 7, replacement of partial meshes (independence of encoding and decoding) may be applied (Method 1-2).

For example, when 3D data (mesh) of a person is encoded, the reference base mesh may be updated to encode a body portion 601 and a face portion 602 independently of each other, as illustrated in FIG. 23. By applying the present technology instead of sub-meshing, the face portion 602 can be easily replaced with the face portion 603 of another expression in the middle of the sequence. In other words, in this case, the face portion 602 and the face portion 603 can also be encoded independently of each other, and therefore, the face portion 602 and the face portion 603 can be switched at any timing. Additionally, depending on the timing, the face portion 602 and the body portion 601 can be integrally inter-coded. Additionally, as described above, a decrease in coding efficiency can be suppressed.

For example, in a case where such replacement is performed by the method described in NPL 1 without sub-meshing, there is no choice but to decode all of the body portion 601, the face portion 602, and the face portion 603 and then replace the face portion 602 with the face portion 603 by image processing. In this method, the face portion 602 unnecessary for reproduction must also be decoded, leading to an increased processing load. By applying the present technology to update the reference mesh and perform the inter-coding and inter-decoding, the body portion 601 and the face portion 603 can be decoded without decoding the face portion 602. Therefore, an increase in the load of the reproduction processing can be suppressed.

Furthermore, applying the present technology also allows any portion other than the face portion to be independently encoded at another timing. In other words, the portion to be replaced can be changed in the time direction.

In this manner, applying the present technology allows more flexible reproduction control to be realized.

### Method 1-3

As described in the fourth row from the top of the table illustrated in FIG. 7, the present technology may be applied to a dynamic mesh generated by capturing a real object (Method 1-3). Possible methods of generating a dynamic mesh include a method of capturing a real object in each frame and generating 3D data (mesh) and a method of tracking (also referred to as mesh tracking) each vertex of a static mesh (for example, a mesh at a certain point of time).

In the case of the dynamic mesh based on capture, meshes of respective frames are generated independently of each other, and thus it is difficult for the topology to remain matched in all the meshes. This may prevent the inter-coding from being easily applied, leading to reduced coding efficiency.

Thus, the present technology may be applied and a portion with a mismatched topology may be deleted from the reference mesh before the inter-coding. For example, as indicated by thick lines in FIG. 24, a mismatched topology is assumed to be present between the reference mesh 611 and the current mesh 612. In this case, the reference mesh 611 and the current mesh 612 may be updated so as to leave portions where the topology is matched between the reference mesh 611 and the current mesh 612 (so as to delete portions where the topology is mismatched), and an updated reference mesh 613 and an updated current mesh 614 may be generated. The updated reference mesh 613 may then be used to encode the updated current mesh 614. This enables a decrease in coding efficiency to be suppressed.

Additionally, for example, as illustrated in FIG. 25, a portion, of the reference mesh 621, whose topology does not match the topology of the current mesh 622 may be polarized to a topology similar to that of the current mesh 622. For example, a mesh 623 may be generated by deleting the mismatched portion of the reference mesh 621, and the same face (vertex 10) as that of the current mesh 622 may be added to the deleted portion. That is, the reference mesh may be updated so as to be closer to the current mesh. This enables a decrease in coding efficiency to be suppressed.

### Method 1-4

As described in the bottom row of the table illustrated in FIG. 7, the present technology may be applied to a dynamic mesh generated by mesh tracking (Method 1-4).

In the case of mesh tracking, the topology remains matched between frames. Therefore, although the inter-coding and inter-decoding are applicable, the current mesh may have low quality with respect to the real object. Such a low-quality portion (having a large difference compared to the shape of the real object) may be excluded from the target of the inter-coding and inter-decoding. For example, in FIG. 26, a portion of the current mesh 632 indicated by a dashed-dotted line frame is assumed to be of low quality. Thus, in order to exclude the low-quality portion, a portion, of the reference mesh 631, corresponding to this portion may be deleted from the reference mesh 631 to generate an updated reference mesh 633. Similarly, the current mesh 632 may be updated to generate an updated current mesh 634. By performing the inter-coding in this manner, the inter-coding can be performed with the low-quality portion removed. Therefore, a decrease in coding efficiency as well as degradation of quality can be suppressed.

### 5. Appendix

### Encoded Data

Although the mesh has been described as an example of the encoding target, the encoding target may be any information. For example, the encoding target may be 3D data of the mesh such as a point cloud. Additionally, the encoding target may be a 2D image. Additionally, the encoding target is not limited to visual information, and may be auditory information such as audio data, or may be vibration data (tactile information) such as haptic data. Additionally, any information other than these may be used, and a plurality of types of information may be used as the encoding target.

### Computer

The above-described series of processing operations can be executed by hardware or software. When the series of processing operations is performed by software, a program constituting the software is installed in a computer or the like. Here, examples of the computer include a computer built into dedicated hardware, or for example, a general-purpose computer in which various programs are installed and which can execute various functions.

Fig. 27 is a block diagram illustrating a configuration example of hardware for a computer that executes the above-described series of processing operations in a program.

In the computer 900 illustrated in Fig. 27, a Central Processing Unit (CPU) 901, a Read Only Memory (ROM) 902, and a Random Access Memory (RAM) 903 are connected to each other via a bus 904.

An input/output interface 910 is also connected to the bus 904. To the input/output interface 910, an input unit 911, an output unit 912, a storage unit 913, a communication unit 914, and a drive 915 are connected.

The input unit 911 includes, for example, a keyboard, a mouse, a microphone, a touch panel, an input terminal, and the like. The output unit 912 includes a display, a speaker, and the like. The storage unit 913 includes a hard disk, a RAM disk, a non-volatile memory, and the like. The communication unit 914 includes a network interface and the like. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, thereby executing the series of processing operations described above. The RAM 903 also appropriately stores data necessary for the CPU 901 to execute various processing operations.

The program executed by the computer can be applied by being recorded on the removable medium 921 serving as a package medium, for example. In that case, the program can be installed in the storage unit 913 via the input/output interface 910 by mounting the removable medium 921 in the drive 915.

The program can also be provided via a wired or wireless transmission medium, such as a local area network, the Internet, or digital satellite broadcasting. In that case, the program can be received by the communication unit 914 and installed in the storage unit 913.

In addition, the program can be installed in advance in the ROM 902 or the storage unit 913.

### Application Target of Present Technology

The present technology can be applied to any configurations. For example, the present technology can be applied to various pieces of electronic equipment.

For example, the present technology can be implemented as a configuration of a part of an apparatus, for example, a processor as System Large Scale Integration (LSI) or the like (for example, a video processor), a module using a plurality of processors or the like (for example, a video module), a unit using a plurality of modules or the like (for example, a video unit), a set including the unit to which other functions are added (for example, a video set), or the like.

Additionally, for example, the present technology can also be applied to a network system configured by a plurality of apparatuses. For example, the present technology can be implemented as cloud computing in which a plurality of apparatuses share processing in cooperation via a network. For example, the present technology may be implemented in a cloud service that provides a service related to an image (moving image) to any terminal such as a computer, Audio Visual (AV) equipment, a portable information processing terminal, or an Internet of Things (IoT) device.

Note that in the present specification, the system means a set of a plurality of components (apparatuses, modules (parts), and the like), and it does not matter whether all the components are in the same housing. Therefore, the system refers to both a plurality of apparatuses housed in separate housings and connected via a network, and one device in which a plurality of modules are housed in one housing.

### Fields and Applications to which the Present Technology can be Applied

A system, an apparatus, a processing unit, and the like to which the present technology is applied can be used in any field such as traffic, medical care, crime prevention, agriculture, livestock industry, mining, beauty, a factory, a home appliance, weather, and natural surveillance. The system, apparatus, processing unit, and the like can be used for any applications.

### Others

Note that in the present specification, the "flag" is information for identifying a plurality of states, and includes not only information used for identifying two states of true (1) or false (0) but also information capable of identifying three or more states. Therefore, the value that can be taken by the "flag" may be, for example, two values of 1/0, or three or more values. That is, the "flag" may include any number of bits, and may include 1bit or a plurality of bits. Additionally, identification information (including a flag) is assumed to be not only a form in which the identification information is included in a bit stream but also a form in which difference information of the identification information with respect to information serving as a certain reference is included in the bit stream. Thus, in the present specification, the "flag" and the "identification information" include not only the information but also difference information with respect to the information serving as the reference.

Additionally, various types of information (metadata and the like) regarding the encoded data (bit stream) may be transmitted or recorded in any form as long as the information is associated with the encoded data. Here, the term "associate" means, for example, that when one data set is processed, the other data set can be used (linked). In other words, the data associated with each other may be integrated into one data set or may be used as a separate data set. For example, the information associated with the encoded data (image) may be transmitted on a transmission path different from that of the encoded data (image). Additionally, for example, the information associated with the encoded data (image) may be recorded in a recording medium different from the recording medium for the encoded data (image) (or in a different recording area of the same recording medium). Note that the "association" may be performed on a part of the data instead of the entire data. For example, an image and information corresponding to the image may be associated with each other in any unit such as a plurality of frames, one frame, or a part of a frame.

In the present specification, terms such as "synthesize", "multiplex", "add", "integrate", "include", "store", "put in", "plug in", and "insert" mean that a plurality of things are put together into one, for example, encoded data and metadata are put together into one data set, and mean one method for the above-described "association".

Additionally, the embodiments of the present technology are not limited to the above-described embodiments, and various modifications can be made without departing from the gist of the present technology.

For example, a configuration described as one device (or processing unit) may be divided and configured as a plurality of devices (or processing units). Conversely, the configurations described above as a plurality of devices (or processing units) may be integrated into one device (or processing unit). It is needless to say that a configuration other than the above-described configuration may be added to the configuration of each device (or each processing unit). When the configuration and operation as the entire system are substantially the same, a part of the configuration of a certain device (or processing unit) may be included in the configuration of another device (or another processing unit).

For example, the above-described program may be executed by any device. In the case above, the device needs to have a necessary function (a functional block or the like) to obtain necessary information.

Additionally, for example, the steps of one flowchart may be executed by a single apparatus or may be shared and executed by a plurality of apparatuses. Furthermore, in a case where a single step includes a plurality of processing operations, the plurality of processing operations may be executed by a single apparatus, or may be shared and executed by a plurality of apparatuses. In other words, the plurality of processing operations included in one step can be executed as processing of a plurality of steps. Conversely, the processing described as a plurality of steps can collectively be executed as one step.

Additionally, for example, the program executed by a computer may be configured to cause the processing of the steps describing the program to be executed in time series in the order described in the present specification, or to be executed in parallel or in an individual manner at necessary timing such as when being called. That is, the processing of each step may be executed in an order different from the above-described order as long as no contradiction occurs. Further, the processing of the steps describing the program may be executed in parallel with the processing of another program, or may be executed in combination with the processing of another program.

Additionally, for example, each of a plurality of technologies related to the present technology can independently be implemented in a single component as long as no contradiction occurs. Of course, the plurality of the present technologies described in the present specification can be implemented in combination with any of the plurality of the present technologies. For example, a part or all of the present technologies described in any of the embodiments can be implemented in combination with a part or all of the present technologies described in another embodiment. Further, a part or all of any of the present technologies described above can be implemented in combination with another technology that is not described above.

The present technology may adopt configurations as described below.
(1) An information processing apparatus, including:
   a control information encoding unit configured to encode control information for controlling a processing target range of inter-coding and inter-decoding of a mesh representing a three dimensional structure of an object;
   a reference mesh update unit configured to update, on the basis of the control information, a reference mesh that is the mesh to be referred to during the inter-coding; and
   an inter-coding unit configured to perform inter-coding on a current mesh that is the mesh of a current frame, by using an updated reference mesh that is the reference mesh that has been updated.
(2) The information processing apparatus according to (1), wherein the inter-coding unit derives motion vectors of corresponding vertices between the updated reference mesh and the current mesh, and encodes the motion vectors.
(3) The information processing apparatus according to (2), further including:
   a non-corresponding portion encoding unit configured to encode a portion, of the current mesh, that does not correspond to the updated reference mesh.
(4) The information processing apparatus according to (3), wherein the non-corresponding portion encoding unit performs intra-coding on a portion, of the current mesh, that does not correspond to the updated reference mesh.
(5) The information processing apparatus according to (3) or (4), wherein the non-corresponding portion encoding unit performs inter-coding on a portion, of the current mesh, that does not correspond to the updated reference mesh.
(6) The information processing apparatus according to any one of (1) to (5), wherein the reference mesh update unit defines a frame associated with the control information as a start frame of an update interval in which the reference mesh is updated, and updates the reference mesh in the update interval.
(7) The information processing apparatus according to (6),
   wherein the control information includes information designating a deletion target face that is a face to be deleted, and
   the reference mesh update unit deletes, from the reference mesh in the update interval, the deletion target face designated by the control information.
(8) The information processing apparatus according to (7), wherein the control information includes, as the information designating the deletion target face, information indicating a reference vertex and the number of links from the reference vertex.
(9) The information processing apparatus according to (8), wherein the reference mesh update unit defines, as target vertices, vertices linked together in such a manner that the link starts with the reference vertex and that the number of links is within that indicated in the information, and the deletion target face is a face including only the target vertices.
(10) The information processing apparatus according to (8) or (9), wherein the reference mesh update unit defines, as target vertices, vertices linked together in such a manner that the link starts with the reference vertex and that the number of links is within that indicated in the information, and the deletion target face is a face including vertices including the target vertices.
(11) The information processing apparatus according to any one of (7) to (10), wherein the control information includes information indicating a three dimensional space region as the information designating the deletion target face.
(12) The information processing apparatus according to (11), wherein the reference mesh update unit defines vertices located in the three dimensional space region as the target vertices, and defines, as the deletion target face, a face including only the target vertices.
(13) The information processing apparatus according to (11) or (12), wherein the reference mesh update unit defines vertices located in the three dimensional space region as the target vertices, and defines, as the deletion target face, a face including vertices including the target vertices.
(14) The information processing apparatus according to any one of (6) to (13),
   wherein the control information includes information designating an addition target face that is a face to be added, and
   the reference mesh update unit adds, to the reference mesh in the update interval, the addition target face designated by the control information.
(15) The information processing apparatus according to (14), wherein the control information includes, as the information designating the addition target face, information indicating addition vertices that are vertices to be added, and information indicating addition links that are links to be added.
(16) The information processing apparatus according to any one of (6) to (15),
   wherein the control information includes information designating a deletion target face that is face to be deleted, and information designating an addition target face that is a face to be added, and
   wherein, in the update interval, the reference mesh update unit deletes, from the reference mesh, the deletion target face designated by the control information and further adds, to the reference mesh, the addition target face designated by the control information.
(17) The information processing apparatus according to any one of (6) to (16),
   wherein the control information includes information designating an end frame of the update interval, and
   the reference mesh update unit defines, as the update interval, an interval from a frame associated with the control information to the end frame designated by the control information, and updates the reference mesh in the update interval.
(18) The information processing apparatus according to any one of (1) to (17),
   wherein the mesh is a base mesh that is generated by decimating vertices of an original mesh to be encoded and that has a lower level of detail than the original mesh,
   wherein, on the basis of the control information, the reference mesh update unit updates a reference base mesh that is the base mesh to be referred to during the inter-coding and the inter-decoding, and
   the inter-coding unit performs inter-coding on a current base mesh that is the base mesh of a current frame, using an updated reference base mesh that is the reference base mesh that has been updated.
(19) The information processing apparatus according to (18), further including:
   a displacement video encoding unit configured to encode a displacement video including frames packed with displacement vectors each indicating a positional difference between a respective one of division points that are vertices of the base mesh obtained by subdivision and a corresponding vertex of the original mesh.
(20) The information processing apparatus according to (18) or (19), further including an attribute video encoding unit configured to encode an attribute video including frames packed with attributes corresponding to the mesh.
(21) An information processing method, including:
   encoding control information for controlling a processing target range of inter-coding and inter-decoding of a mesh representing a three dimensional structure of an object;
   updating, on the basis of the control information, a reference mesh that is the mesh to be referred to during the inter-coding; and
   performing inter-coding on a current mesh that is the mesh of a current frame, using an updated reference mesh that is the reference mesh that has been updated.
(31) An information processing apparatus, including:
   a control information decoding unit configured to decode encoded data to generate control information for controlling a processing target range of inter-coding and inter-decoding of a mesh representing a three dimensional structure of an object;
   a reference mesh update unit configured to update, on the basis of the control information, a reference mesh that is the mesh to be referred to during the inter-decoding; and
   an inter-decoding unit configured to perform inter-decoding on encoded data using an updated reference mesh that is the reference mesh that has been updated, to generate a current mesh that is the mesh of a current frame.
(32) The information processing apparatus according to (31), wherein the inter-decoding unit decodes the encoded data to generate motion vectors of corresponding vertices between the updated reference mesh and the current mesh, and adds the motion vectors to the updated reference mesh to generate the current mesh.
(33) The information processing apparatus according to (32), further including a non-corresponding portion decoding unit configured to decode encoded data to generate a portion, of the current mesh, that does not correspond to the updated reference mesh.
(34) The information processing apparatus according to (33), wherein the non-corresponding portion decoding unit performs intra-decoding on the encoded data to generate a portion, of the current mesh, that does not correspond to the updated reference mesh.
(35) The information processing apparatus according to (33) or (34), wherein the non-corresponding portion decoding unit performs inter-decoding on the encoded data to generate a portion, of the current mesh, that does not correspond to the updated reference mesh.
(36) The information processing apparatus according to any one of (31) to (35), wherein the reference mesh update unit defines a frame associated with the control information as a start frame of an update interval in which the reference mesh is updated, and updates the reference mesh in the update interval.
(37) The information processing apparatus according to (36),
   wherein the control information includes information designating a deletion target face that is a face to be deleted, and
   the reference mesh update unit deletes, from the reference mesh in the update interval, the deletion target face designated by the control information.
(38) The information processing apparatus according to (37), wherein the control information includes, as the information designating the deletion target face, information indicating a reference vertex and the number of links from the reference vertex.
(39) The information processing apparatus according to (38), wherein the reference mesh update unit defines, as target vertices, vertices linked together in such a manner that the link starts with the reference vertex and that the number of links is within that indicated in the information, and the deletion target face is a face including only the target vertices.
(40) The information processing apparatus according to (38) or (39), wherein the reference mesh update unit defines, as target vertices, vertices linked together in such a manner that the link starts with the reference vertex and that the number of links is within that indicated in the information, and the deletion target face is a face including vertices including the target vertices.
(41) The information processing apparatus according to any one of (37) to (40), wherein the control information includes information designating a three dimensional space region as the information designating the deletion target face.
(42) The information processing apparatus according to (41), wherein the reference mesh update unit defines, as the target vertices, vertices located in the three dimensional space region, and defines, as the deletion target face, a face including only the target vertices.
(43) The information processing apparatus according to (41) or (42), wherein the reference mesh update unit defines, as the target vertices, vertices located in the three dimensional space region, and defines, as the deletion target face, a face including vertices including the target vertices.
(44) The information processing apparatus according to any one of (36) to (43),
   wherein the control information includes information designating an addition target face that is a face to be added, and
   the reference mesh update unit adds, to the reference mesh in the update interval, the addition target face designated by the control information.
(45) The information processing apparatus according to (44), wherein the control information includes, as the information designating the addition target face, information indicating addition vertices that are vertices to be added and information indicating addition links that are links to be added.
(46) The information processing apparatus according to any one of (36) to (45),
   wherein the control information includes information designating deletion target face that is a face to be deleted and information designating an addition target face that is a face to be added, and
   wherein, in the update interval, the reference mesh update unit deletes, from the reference mesh, the deletion target face designated by the control information, and further adds, to the reference mesh, the addition target face designated by the control information.
(47) The information processing apparatus according to any one of (36) to (46),
   wherein the control information includes information designating an end frame of the update interval, and
   the reference mesh update unit defines, as the update interval, an interval from a frame associated with the control information to the end frame designated by the control information, and updates the reference mesh in the update interval.
(48) The information processing apparatus according to any one of (31) to (47),
   wherein the mesh is a base mesh that is generated by decimating vertices of an original mesh to be encoded and that has a lower level of detail than the original mesh,
   wherein, on the basis of the control information, the reference mesh update unit updates a reference base mesh that is the base mesh to be referred to during the inter-coding and the inter-decoding, and
   the inter-decoding unit performs inter-decoding on encoded data using an updated reference base mesh that is the reference base mesh that has been updated, to generate a current base mesh that is the base mesh of a current frame.
(49) The information processing apparatus according to (48), further including:
   a displacement video decoding unit configured to decode encoded data to generate a displacement video including frames packed with displacement vectors each indicating a positional difference between a respective one of division points that are vertices of the base mesh obtained by subdivision and a corresponding vertex of the original mesh.
(50) The information processing apparatus according to (48) or (49), further including:
   an attribute video decoding unit configured to decode encoded data to generate an attribute video including frames packed with attributes corresponding to the mesh.
(51) An information processing method, including:
   decoding encoded data to generate control information for controlling a processing target range of inter-coding and inter-decoding of a mesh representing a three dimensional structure of an object;
   updating, on the basis of the control information, a reference mesh that is the mesh to be referred to during the inter-decoding; and
   performing inter-decoding on the encoded data using an updated reference mesh that is the reference mesh that has been updated, to generate a current mesh that is the mesh of a current frame.

### Reference Signs List

100 Encoding apparatus, 101 Control unit, 111 Encoding method selection unit, 112 Control information supply unit, 113 Control information encoding unit, 114 Reference mesh update unit, 115 Inter-coding unit, 116 Intra-coding unit, 117 Multiplexer, 300 Decoding apparatus, 301 Control unit, 311 Demultiplexer, 312 Control information decoding unit, 313 Reference mesh update unit, 314 Inter-decoding unit, 315 Intra-decoding unit, 316 Synthesis unit, 900 Computer

## Claims

1. An information processing apparatus, comprising:
a control information encoding unit configured to encode control information for controlling a processing target range of inter-coding and inter-decoding of a mesh representing a three dimensional structure of an object;
a reference mesh update unit configured to update, based on the control information, a reference mesh that is the mesh to be referred to during the inter-coding; and
an inter-coding unit configured to perform inter-coding on a current mesh that is the mesh of a current frame by using an updated reference mesh that is the reference mesh that has been updated.

2. The information processing apparatus according to claim 1, wherein
the inter-coding unit derives motion vectors of corresponding vertices between the updated reference mesh and the current mesh, and encodes the motion vectors.

3. The information processing apparatus according to claim 1, wherein
the reference mesh update unit defines a frame associated with the control information as a start frame of an update interval in which the reference mesh is updated, and updates the reference mesh in the update interval.

4. The information processing apparatus according to claim 3, wherein
the control information includes information designating a deletion target face that is a face to be deleted, and
the reference mesh update unit deletes, from the reference mesh in the update interval, the deletion target face designated by the control information.

5. The information processing apparatus according to claim 4, wherein
the control information includes, as the information designating the deletion target face, information indicating a reference vertex and the number of links from the reference vertex.

6. The information processing apparatus according to claim 4 wherein
the control information includes information indicating a three dimensional space region as the information designating the deletion target face.

7. The information processing apparatus according to claim 3, wherein
the control information includes information designating an addition target face that is a face to be added, and
the reference mesh update unit adds, to the reference mesh in the update interval, the addition target face designated by the control information.

8. The information processing apparatus according to claim 3, wherein
the control information includes information designating an end frame of the update interval, and
the reference mesh update unit defines, as the update interval, an interval from a frame associated with the control information to the end frame designated by the control information, and updates the reference mesh in the update interval.

9. The information processing apparatus according to claim 1, wherein
the mesh is a base mesh that is generated by decimating vertices of an original mesh to be encoded and that has a lower level of detail than the original mesh,
wherein, based on the control information, the reference mesh update unit updates a reference base mesh that is the base mesh to be referred to during the inter-coding and the inter-decoding, and
the inter-coding unit performs inter-coding on a current base mesh that is the base mesh of a current frame, using an updated reference base mesh that is the reference base mesh that has been updated.

10. An information processing method, comprising:
encoding control information for controlling a processing target range of inter-coding and inter-decoding of a mesh representing a three dimensional structure of an object;
updating, based on the control information, a reference mesh that is the mesh to be referred to during the inter-coding; and
performing inter-coding on a current mesh that is the mesh of a current frame, using an updated reference mesh that is the reference mesh that has been updated.

11. An information processing apparatus, comprising:
a control information decoding unit configured to decode encoded data to generate control information for controlling a processing target range of inter-coding and inter-decoding of a mesh representing a three dimensional structure of an object;
a reference mesh update unit configured to update, based on the control information, a reference mesh that is the mesh to be referred to during the inter-decoding; and
an inter-decoding unit configured to perform inter-decoding on encoded data using an updated reference mesh that is the reference mesh that has been updated, to generate a current mesh that is the mesh of a current frame.

12. The information processing apparatus according to claim 11, wherein
the inter-decoding unit decodes the encoded data to generate motion vectors of corresponding vertices between the updated reference mesh and the current mesh, and adds the motion vectors to the updated reference mesh to generate the current mesh.

13. The information processing apparatus according to claim 11, wherein
the reference mesh update unit defines a frame associated with the control information as a start frame of an update interval in which the reference mesh is updated, and updates the reference mesh in the update interval.

14. The information processing apparatus according to claim 13, wherein
the control information includes information designating a deletion target face that is a face to be deleted, and
the reference mesh update unit deletes, from the reference mesh in the update interval, the deletion target face designated by the control information.

15. The information processing apparatus according to claim 14, wherein
the control information includes, as the information designating the deletion target face, information indicating a reference vertex and the number of links from the reference vertex.

16. The information processing apparatus according to claim 14, wherein
the control information includes information indicating a three dimensional space region as the information designating the deletion target face.

17. The information processing apparatus according to claim 13, wherein
the control information includes information designating an addition target face that is a face to be added, and
the reference mesh update unit adds, to the reference mesh in the update interval, the addition target face designated by the control information.

18. The information processing apparatus according to claim 13, wherein
the control information includes information designating an end frame of the update interval, and
the reference mesh update unit defines, as the update interval, an interval from a frame associated with the control information to the end frame designated by the control information, and updates the reference mesh in the update interval.

19. The information processing apparatus according to claim 11, wherein
the mesh is a base mesh that is generated by decimating vertices of an original mesh to be encoded and that has a lower level of detail than the original mesh,
wherein, based on the control information, the reference mesh update unit updates a reference base mesh that is the base mesh to be referred to during the inter-coding and the inter-decoding, and
the inter-decoding unit performs inter-decoding on encoded data using an updated reference base mesh that is the reference base mesh that has been updated, to generate a current base mesh that is the base mesh of a current frame.

20. An information processing method, comprising:
decoding encoded data to generate control information for controlling a processing target range of inter-coding and inter-decoding of a mesh representing a three dimensional structure of an object;
updating, based on the control information, a reference mesh that is the mesh to be referred to during the inter-decoding; and
performing inter-decoding on the encoded data using an updated reference mesh that is the reference mesh that has been updated, to generate a current mesh that is the mesh of a current frame.
